# EUROPÄISCHE PATENTSCHRIFT

(11) **EP 3 371 077 B1**
(45) Veröffentlichungstag und Bekanntmachung des Hinweises auf die Patenterteilung: **04.05.2022**
(21) Anmeldenummer: 16779139.1
(22) Anmeldetag: 12.10.2016
(51) Int. Cl.: B65G 1/137, G06Q 10/08, G06Q 50/28

(54) **LAGER- UND KOMMISSIONIERSYSTEM SOWIE VERFAHREN ZUM EINLAGERN VON STÜCKGÜTERN IN EINEN KOMMISSIONIER-AUTOMAT**
STORAGE AND ORDER-PICKING SYSTEM AND METHOD FOR STORING PIECE GOODS IN AN ORDER-PICKING MACHINE
SYSTÈME DE STOCKAGE ET DE PRÉPARATION DE COMMANDES AINSI QUE PROCÉDÉ DE STOCKAGE DE MARCHANDISES DE DÉTAIL DANS UN AUTOMATE DE PRÉPARATION DE COMMANDES

(30) Priorität: 03.11.2015 DE 102015118832
(43) Veröffentlichungstag der Anmeldung: 12.09.2018
(73) Patentinhaber: SSI Schäfer Automation GmbH, 97232 Giebelstadt (DE)
(72) Erfinder: ISSING, Elmar, 97232 Giebelstadt (DE); HERZMAIER, Christian, 97076 Würzburg (DE)
(74) Vertreter: Witte, Weller & Partner Patentanwälte mbB
(86) Internationale Anmeldenummer: PCT/EP2016/074467
(87) Internationale Veröffentlichungsnummer: WO 2017/076595

(56) Entgegenhaltungen:
- EP-A1- 2 065 317
- WO-A1-2007/048155
- WO-A1-2015/039818
- DE-A1-102006 057 758
- DE-A1-102008 039 764
- DE-A1-102013 103 869
- DE-A1-102013 106 640
- DE-B4-102006 057 758
- US-A- 4 508 484
- US-A- 4 669 047

## Beschreibung

Die vorliegende Erfindung betrifft ein Lager- und Kommissioniersystem zum Kommissionieren von Stückgütern mittels eines Kommissionier-Automaten, der eingerichtet ist, die Stückgüter vollautomatisch einzulagern, zu kommissionieren und abzugeben. Die Erfindung betrifft ferner ein Verfahren zum Befüllen eines Kommissionier-Automaten mit Stückgütern. Die Erfindung kommt insbesondere im Pharmahandel zum Einsatz und betrifft insbesondere Piece-Picking-Anwendungen.

Rechner- bzw. computergesteuerte Kommissionierlager sind seit langem bekannt. Das Dokument DE 31 00 020 A1 beispielsweise offenbart ein rechnergesteuertes Kommissionierlager mit mehreren Bereichen, in denen Stückgüter bzw. Artikel entsprechend ihrer Zugriffs- bzw. Entnahmehäufigkeit (z.B. ABC-Verteilung) gelagert sind. Es gibt manuelle, semiautomatische und vollautomatische Kommissionier-Bereiche, die alle über einen (einzigen) Förderer (Stetigförderer) miteinander verbunden sind, um Sammelmittel (z.B. Auftragsbehälter, Kartons, Wannen, Tablare oder Ähnliches) zwischen den Bereichen zu transportieren. Die Bereiche speichern im Wesentlichen jeweils Artikel einer der Entnahme- bzw. Zugriffshäufigkeit-Kategorien.

Generell werden Artikel, die eine hohe Zugriffshäufigkeit aufweisen (A-Artikel), häufig in einem Bereich (bzw. einer Zone) des Gesamtsystems kommissioniert, wo Kommissionier-Automaten (sogenannte Vollautomaten) eingesetzt werden, um die Artikel vollautomatisch zusammenzustellen (d.h. zu entnehmen und zu sammeln) und abzugeben.

Das Dokument DE 92 03 273 U1 offenbart eine derartige Zone mit entsprechenden Vollautomaten, die auch als "A-Frames" bezeichnet werden. Diese Vollautomaten weisen ein A-förmiges Grundgestell auf, wobei die Artikel (vorzugsweise A-Artikel) entlang den im Wesentlichen vertikal orientierten Schenkeln des Grundgestells in Schächten bevorratet sind, um am Fuß der Schächte mittels Auswerfern auf ein Zentralband ausgeworfen zu werden, welches sich durch die Schenkel erstreckt, um alle Schächte des Vollautomaten zu passieren. Die Befüllung der Vorratsschächte für die Artikel erfolgt manuell aus Vorratsregalen, die in der Nähe des Vollautomaten angeordnet sind.

Ein weiterer Vollautomat (Apotheken-Automat) ist in der WO 2006/051329 A2 offenbart.

Das Dokument WO 2010/017873 A1 offenbart einen Halbautomaten, der durch eine Regalanordnung mit Durchlaufregalen zum Bereitstellen von Lagerbehältern gebildet wird. Die Lagerbehälter werden vollautomatisch mittels Einebenen-Regalbediengeräten (Shuttle) von hinten in die Durchlaufkanäle des Durchlaufregals eingespeist. Die Kommissionierung erfolgt manuell von vorn, indem Artikel manuell aus den Lagerbehältern entnommen werden, die im jeweiligen Durchlaufkanal vorn stehen. Die entnommenen Artikel werden manuell in Auftragsbehälter abgegeben, die mit einem Fördersystem am Regal vorbeigeführt werden. Lagerbehälter, die Stückgüter enthalten, die nicht mehr benötigt werden, können über dieses Fördersystem ebenfalls abtransportiert werden.

Da die oben erwähnten "A-Frames" in der Regel nur für Stückgüter einer hohen Zugriffshäufigkeit-Kategorie verwendet werden und die Stückgüter "automatentauglich" (d.h. vorzugsweise eine Parallelepiped-Form) sein müssen, hat man bereits eine Kombination mit Vollautomaten für Stückgüter einer mittleren und/oder niedrigen Zugriffshäufigkeit-Kategorie (B-Artikel und/oder C-Artikel) ersonnen. Das Dokument WO 2015/039818 A1 offenbart einen Vollautomaten für B-Artikel und/oder C-Artikel. Diese Vollautomaten sind mit weiteren Vollautomaten für A-Artikel entlang eines Zentralbands (Abführ-Fördersystem) hintereinander angeordnet. Der Vollautomat für die B-Artikel und/oder C-Artikel ist in Form eines in sich geschlossenen Regalblocks realisiert. Der Regalblock ist seitlich angrenzend an das Zentralband angeordnet. Der Regalblock weist zwei (stationäre) Regale mit einer Vielzahl von Lagerplätzen auf. Die Regale definieren eine Regalgasse zwischen sich. In der Regalgasse bewegt sich zumindest ein schienengebundenes Regalbediengerät, das ein horizontal verfahrbares Fahrwerk mit einem vertikal orientierten Mast aufweist, wobei sich ein Lastaufnahmemittel (z.B. Greifer) vertikal entlang des Masts bewegt, um Artikel quer zur Regalgasse in die Lagerplätze (Regalfächer) ein- und auszulagern. Das Lastaufnahmemittel weist einen zangenförmigen Greifer auf, um die Artikel seitlich zu greifen. Der Greifer kann in der Querrichtung in die Lagerplätze hinein und aus den Lagerplätzen heraus bewegt werden. Sowohl die Einlagerung als auch die Auslagerung der Artikel erfolgt vollautomatisch mittels des Regalbediengeräts. Zum Zwecke einer Kommissionierung ausgelagerter Artikel werden von den Regalbediengeräten an regalintegrierte Pufferschalen abgegeben. Die Pufferschalen sind so angeordnet und ausgebildet, dass gepufferte Artikel zu einem gewünschten Zeitpunkt an das Zentralband abgegeben werden können, welches außen entlang des Regalblocks geführt ist. Die Einlagerung der Artikel in den Regalblock hinein erfolgt über ein Pufferband, welches außerhalb des Regalblocks an den Regalblock angrenzend angeordnet ist. Einzulagernde Artikel werden im Bereich des Pufferbands mittels eines Scanners erfasst, um deren Identität festzustellen. Die identifizierten einzulagernden Artikel werden dann an einen regalintegrierten Transferplatz abgegeben, der einen konventionellen Lagerplatz ersetzt. Die Regalbediengeräte holen den einzulagernden Artikel von dem regalintegrierten Transferplatz ab und lagern den einzulagernden Artikel anschließend in einen freien (d.h. unbelegten) Lagerplatz ein. Die Einlagerung erfolgt üblicherweise zu Zeiten, zu denen die Regalbediengeräte nicht mit Kommissionieraufgaben (Sammeln und Abgeben) beschäftigt sind.

Die WO 2005/113389 A1 offenbart die gleiche Methodik wie die oben genannte WO 2015/039818 A1, wobei die Regalblöcke und Pufferschalen aber manuell anstatt automatisiert betrieben werden.

Bei der WO 2015/039818 A1 werden die Artikel zeitlich kurz bevor sie tatsächlich in den Regalblock eingelagert werden (erneut) identifiziert, weil die einzulagernden Artikel in Regalblock-spezifischen Transportbehältern durchmischt zum jeweiligen Regalblock gebracht werden. Die Transportbehälter enthalten regelmäßig unterschiedliche Artikeltypen, so dass es für eine Lagerplatzverwaltung zwingend notwendig ist, den gerade einzulagernden Artikel eindeutig zu identifizieren. Aber selbst in dem Fall, wenn der Transportbehälter ausschließlich Artikel eines einzigen Typs enthält, ist es erforderlich, den jeweiligen Artikel sicher zu identifizieren, weil die einzulagernden Artikel z.B. unterschiedlichen Chargen angehören können und somit z.B. unterschiedliche Mindesthaltbarkeitsdaten aufweisen können. Dies ist insbesondere im Pharmahandel und Lebensmittelhandel von Relevanz, um lediglich einige Beispiele zu nennen. Eine sogenannte Nachschub-Befüllung ist also mit Aufwand verbunden und erfordert eine sichere Identifizierung der Artikel kurz vor deren tatsächlicher Einlagerung in den jeweiligen Regalblock. Die Artikel werden also oft "angefasst", bevor sie tatsächlich eingelagert werden. Für den Fall, dass das System mehrere dieser Regalblöcke aufweist, müssen die Nachschub-Transportbehälter vorab Regal-spezifisch konfiguriert werden. Diese Konfiguration erfolgt üblicherweise in einem Wareneingangsbereich des Systems oder bereits systemextern beim Lieferanten der Nachschub-Artikel. Diesen Konfigurationsprozess gilt es zu vereinfachen.

Weiterhin ist eine Initialbefüllung dieser Regalblöcke zeitintensiv, weil die einzulagernden Artikel alle identifiziert werden müssen und ausschließlich über den regalintegrierten Transferplatz in die Regalblöcke hineingelangen können.

Dies gilt auch für Regalblöcke der in der WO 2015/039818 A1 beschriebenen Art, die kein externes zuführendes Pufferband aufweisen. Es gibt Regalblöcke anderer Hersteller, die eine Regal-integrierte Nachschubstation aufweisen, die manuell betrieben wird. Bei derartigen manuellen Nachschubstationen werden die einzulagernden Artikel üblicherweise einzeln in eine von außen verschließbare Öffnung innerhalb des Regalblocks hineingegeben. Dort wird der hineingegebene Artikel identifiziert und anschließend vom Regalbediengerät zwecks Einlagerung abgeholt. Das dauert lang.

Sowohl bei der automatisierten Pufferband-Lösung als auch bei der manuellen Nachschubstation geht für das Gesamtsystem ferner Raum verloren, weil in der unmittelbaren Nähe der Regalblöcke Raum benötigt wird, um dem jeweiligen Regalblock die einzulagernden Artikel zuzuführen. Somit verringert sich eine Lagerdichte (Anzahl von gelagerten Artikeln pro Volumeneinheit).

Ferner offenbart die DE 10 2006 057 758 B4 ein Verfahren und eine Vorrichtung zum Kommissionieren von Waren sowie ein Lagerverwaltungssystem. Die DE 10 2005 042 643 A1 offenbart ein Kommissionierverfahren. Die AT 502 982 B1 offenbart ein Verfahren und eine Anlage zum Kommissionieren von Artikeln.

Das Dokument DE 10 2013 103 869 A1 offenbart ein Lager- und Kommissioniersystem zum Kommissionieren von Stückgütern gemäß Kommissionieraufträgen, wobei die Stückgüter verschiedenen Zugriffshäufigkeits-Kategorien angehören, aufweisend: - Kommissionierzonen für Stückgüter, die im Wesentlichen einer Zugriffshäufigkeits-Kategorie angehören, - eine, vorzugsweise einzige, Vereinnahmungsstation, - ein Transportsystem, das eine Vielzahl von Transportträgern aufweist, wobei jeder der Transportträger ein Tablar ist, das eine Vielzahl von Ablageplätzen aufweist, wo das erfasste Wareneingangs-Stückgut zwecks Beladung des Transportträgers platzierbar ist, und wobei jedem der Ablageplätze eine individualisierende Ablageplatz-Kennung zugeordnet ist; und - eine DVA, die eingerichtet ist, eine Referenz-Tabelle zu verwalten und zu aktualisieren, wobei die Tabelle eingerichtet ist, dem Wareneingangs-Stückgut das Attribut, einen der Ablageplätze und einen der Lagerplätze zuzuordnen; wobei das Transportsystem die Vereinnahmungsstation und den zumindest einen Kommissionierzone materialflusstechnisch miteinander verbindet, um einen der Transportträger, der in der Vereinnahmungsstation mit dem erfassten Wareneingangs-Stückgut beladen wurde, indem das erfasste Wareneingang-Stückgüter auf einem ausgewählten Ablageplatz platziert wird, von der Vereinnahmungsstation in die zumindest einen der Kommissionierzone hinein zu transportieren und geleerte Transportträgern zwecks Beladung zurück zur Vereinnahmungsstation zu transportieren.

Es ist daher eine Aufgabe der vorliegenden Erfindung, ein System und ein Verfahren vorzusehen, die eine verbesserte vollautomatische Kommissionierung einschließlich einer vollautomatischen Einlagerung ermöglichen.

Diese Aufgabe wird gelöst durch ein Lager- und Kommissioniersystem gemäß Anspruch 1 und ein Verfahren gemäß Anspruch 13.

Das System weist ein Transportsystem auf, das eine Vielzahl von Transportträgern aufweist. Die Transportträger sind als Tablare implementiert, die vorzugsweise rand- bzw. rahmenlos ausgebildet sind. Die Transportträger können antirutschbeschichtet sein. Die Transportträger können visuell erkennbare Markierungen, wie z.B. Linien, zur Definition von Ablageorten bzw. zur Visualisierung der Ablageorte aufweisen. Jeder der Transportträger weist eine Vielzahl von Ablageplätzen auf. Jeder der Ablageplätze ist insbesondere unterscheidbar, eindeutig festgelegt, geometrisch vorab fest definiert bzw. überlappt keinen anderen Ablageplatz. Der Ablageplatz stellt einen Ort dar, wo das erfasste Wareneingangs-Stückgut zwecks Beladung des Transportträgers platzierbar ist, wobei jedem der Ablageplätze eine individualisierende Ablageplatz-Kennung zugeordnet ist.

Die Erfindung zeichnet sich zum einen dadurch aus, dass die einzulagernden Stückgüter nur ein einziges Mal erfasst werden müssen, um (eindeutig) für eine Einlagerung in den Kommissionier-Automaten identifiziert zu werden. Diese Identifizierung kann manuell, semiautomatisch oder vollautomatisch (z.B. mit dem "Order Verifier" der Anmelderin, der in der DE 10 2010 033 697 A1 offenbart ist) erfolgen. Diese Identifizierung erfolgt in der Vereinnahmungsstation, die insbesondere in einem Wareneingangsbereich des Systems angeordnet ist. Dies bedeutet, dass die (Wareneingangs-) Stückgüter nur ein einziges Mal erfasst bzw. identifiziert werden, nämlich insbesondere zu dem Zeitpunkt, wenn die Stückgüter dem System zugeführt werden. Üblicherweise treten die Stückgüter über den Wareneingangsbereich in das System ein. Die Stückgüter, die in die Automaten eingelagert werden, werden dann nicht mehr bei den Automaten erneut identifiziert. Die Identifizierung erfolgt gleichzeitig mit einer Eingangsprüfung der Stückgüter im Wareneingang. Während dieser Überprüfung wird sichergestellt, dass die neu angelieferten Stückgüter, die von Lieferanten an das System gesendet werden, mit den bestellten (Nachschub-) Stückgütern übereinstimmen.

Die neu angelieferten Stückgüter, d.h. die Wareneingangs-Stückgüter, müssen vom Lieferanten nicht Automaten-spezifisch vorab konfiguriert werden, d.h. vorab zusammengestellt werden. Wareneingangs-Stückgüter können typenrein, z.B. auf Paletten, von den Lieferanten angeliefert werden. Eine Vereinzelung derartiger typenreiner Wareneingangs-Stückgüter erfolgt in der Vereinnahmungsstation, vorzugsweise Automaten-spezifisch auf die Transportträger. Eine Lagerplatzverwaltung (Steuerungssoftware) kann, insbesondere vorab, eine Automaten-spezifische (d.h. insbesondere bedarfsgerecht) Transportträgerbeladung mit Stückgütern für den jeweiligen Nachschub bestimmen. Die beladenen Transportträger können dann automatisiert zu den Automaten gebracht werden. Somit sind die Einlagerung der Stückgüter in die Automaten und die (Automaten-spezifische und bedarfsgerechte) Beladung der Transportträger zeitlich entkoppelbar.

Sobald ein Wareneingangs-Stückgut auf einem Ablageplatz auf einem der Transportträger platziert ist, kann dieses Stückgut datentechnisch eindeutig verfolgt werden. Dies bedeutet, dass mit der Platzierung des Stückguts auf dem Transportträger auch ein späterer Lagerplatz innerhalb des Automaten verfolgbar ist. Die einzulagernden Stückgüter werden nach der initialen Wareneingangsprüfung und Beladung nicht mehr vermischt. Eine erneute Identifizierung im unmittelbaren Bereich des Automaten, um sicherzustellen, dass das richtige Stückgut auf dem richtigen Lagerplatz platziert wird, ist überflüssig. Neben der zeitlichen Entkopplung und der Einsparung des zusätzlichen Erfassungs-/ Identifizierungsschritts hat der Einsatz der Transportträger den Vorteil, dass eine große Anzahl von einzulagernden Stückgütern (Wareneingangs-Stückgütern) gleichzeitig in den jeweiligen Automaten einlagerbar sind. Die Transportträger können eine große Anzahl von einzulagernden Stückgütern aufnehmen, die dann alle gleichzeitig in den jeweiligen Automaten transferiert werden. Mehrere Transportträger können innerhalb kurzer Zeit in den jeweiligen Automaten eingespeist werden, so dass insbesondere eine Initialbefüllung des jeweiligen Automaten schnell erfolgt.

Der Einsatz der Transportträger erlaubt ferner einen sogenannten "Cross-Docketing"-Betrieb des Automaten. Dies bedeutet, dass Wareneingangs-Stückgüter, die dem jeweiligen Automaten gerade auf Transportträger zugeführt wurden, direkt von diesen herunter kommissioniert werden können, ohne vorher in einen der Lagerplätze eingelagert zu werden. Die Transportträger werden somit vorübergehend wie konventionelle Lagerplätze zum Zwecke der Kommissionierung benutzt. Dieser "Cross-Docketing"-Betrieb ist insbesondere zu Zeiten einer Spitzenbelastung (z.B. während einer Sonderangebotsphase oder während des Weihnachtsgeschäfts) von Vorteil, weil die Kommissionierleistung (Picks pro Stunde) hoch gehalten werden kann, da favorisierte Stückgüter jederzeit zur Kommissionierung bereitstehen und nicht ausgehen.

Ferner ist es bevorzugt, die Vereinnahmungsstation so einzurichten, dass dort die Ablageplatz-Kennung des ausgewählten Ablageplatzes erfasst werden kann.

Dies ist insbesondere für den Fall von Vorteil, wenn ein Mitarbeiter den tatsächlichen Ablageplatz auswählt. Dies bedeutet, dass die Datenverarbeitungsanlage den freien Ablageplatz nicht fix vorgibt, sondern dass der freie Ablageplatz situativ vom Mitarbeiter ausgewählt wird, der den entsprechenden Transportträger vor sich stehen hat. Zu diesem Zweck kann der Mitarbeiter eine handelsübliche Erfassungseinrichtung benutzen, wie z.B. einen Scanner, eine Tastatur zur Eingabe eines entsprechenden Codes in alphanummerischen Zeichen, ein Headset für eine Dateneingabe mittels Sprache oder ein Kamerasystem mit integrierter Bilderkennung, das oberhalb des Transportträgers angeordnet ist und das den Beladevorgang überwacht.

Weiter ist es bevorzugt, dass der mindestens eine Automat aufweist: ein Regal bzw. eine Regalanordnung, die vorzugsweise aus mehreren Regalen mit einer Regalgasse dazwischen besteht und die eine Vielzahl von Regalböden aufweist, die übereinander und/oder nebeneinander angeordnet sind und in welchen die Stückgüter, vorzugsweise ladungsträgerlos, einfach- oder mehrfachtief, vorzugsweise nebeneinander, lagerbar sind. Der mindestens eine Automat weist ferner mindestens eine, vorzugsweise regalintegrierte stationäre, Sammelvorrichtung auf, die z.B. als Trichter, Schütte, Kanal, Fördertechnik oder Ähnliches realisiert sein kann. Die Sammelvorrichtung ist zum vorübergehenden Sammeln mehrerer Stückgüter eingerichtet und weist eine Aufnahmeöffnung sowie eine Abgabevorrichtung auf. Der mindestens eine Automat weist ferner ein Regalbediengerät, wie z.B. ein konventionelles Regalbediengerät mit Mast oder ein Einebenen-Regalbediengerät wie ein Shuttle, auf, das in einer Längsrichtung entlang des Regals beweglich ist und das eingerichtet ist, die Stückgüter entlang einer Querrichtung, vorzugsweise senkrecht zur Längsrichtung und insbesondere einzeln, in bzw. aus jedem der Lagerplätze ein- und auszulagern und an die Aufnahmeöffnungen der Sammelvorrichtungen abzugeben.

Ein derartiger Automat arbeitet vollautomatisch. Sowohl die Einlagerung als auch die Auslagerung der Stückgüter erfolgt vollautomatisch. Die Sammelvorrichtungen ermöglichen eine zeitliche Entkopplung des Kommissioniervorgangs und des Abtransports eines fertig kommissionierten Auftrags. Ein derartiger Automat wird insbesondere im Pharmabereich eingesetzt und wird dort als "Apotheken-Automat" bezeichnet.

Das Transportsystem weist eine Vielzahl von fahrerlosen Transportfahrzeugen (FTF) auf, wobei die FTF eingerichtet sind, die Transportträger durch das System zu transportieren.

Ein fahrerloses Transportsystem (FTS) mit einer Vielzahl von FTF hat den Vorteil, dass Transportwege beliebig und veränderlich definierbar sind. Man ist nicht an den statischen Streckenverlauf eines Stetigförderers (z.B. Rollenförderers) gebunden. Bedarfsabhängig können mehr oder weniger FTF im System eingesetzt werden (Skalierbarkeit). Die FTF können auch zum Kommissionieren bzw. Abholen fertig kommissionierter Stückgüter eingesetzt werden. Wenn keine konventionelle Fördertechnik (Stetigförderer) eingesetzt wird, haben die FTF ausreichend Raum, um Fahrwege beliebig zu definieren und zurückzulegen.

Ferner ist der mindestens eine Automat so eingerichtet, dass die FTF durch den mindestens einen Automaten hindurchfahren können, um die Transportträger innerhalb des mindestens einen Automaten abzugeben und aufzunehmen.

Durch eine Verlagerung des "Wareneingangs" des Automaten in den Automaten hinein kann Raum gewonnen werden. Die Automaten können dichter zueinander angeordnet werden. Die Lagerdichte steigt. Der Verkehr der FTF außerhalb der Automaten kann frei fließen, weil die FTF nicht außerhalb der Automaten anhalten müssen, um die einzulagernden Stückgüter abzugeben.

Vorzugsweise werden die FTF so an dem mindestens einen Automaten vorbei und/oder durch den mindestens einen Automaten hindurch geführt, dass kommissionierte Stückgüter automatisiert an die FTF abgebbar sind.

Hier kommt das einheitliche Transportkonzept zum Ausdruck. Die FTF werden sowohl zum Einlagern als auch zum Auslagern der Stückgüter eingesetzt. Bei der Auslagerung bzw. dem Abtransport fertig kommissionierter Aufträge, ist es möglich, eine fließende (kontinuierliche) Stückgutübergabe durchzuführen, indem die FTF während einer Übergabe der gesammelten Stückgüter nicht anhalten, sondern weiterfahren. In diesem Fall ist es unbeachtlich, ob die Auslagerungs-FTF am Automaten vorbei oder durch den Automaten hindurchfahren.

Bei einer weiteren bevorzugten Ausführungsform ist jeder der Automaten in einem Kommissionier-Bereich des Systems angeordnet, wobei die Vereinnahmungsstation in einem Wareneingangs-Bereich des Systems angeordnet ist und wobei die Bereiche des Systems entfernt zueinander angeordnet sind.

Der Einlagerungsprozess und der Vereinnahmungsprozess einschließlich der Erfassung der Wareneingangs-Stückgüter wird gegenüber dem Stand der Technik von den Automaten an vorzugsweise einen einzigen, zentralen Ort verlagert. Auch diese Maßnahme ermöglicht eine Erhöhung der Lagerdichte und das "One-Touch"-Konzept.

Insbesondere ist das Wareneingangs-Stückgut ausschließlich über die Transportträger in den mindestens einen Automaten einlagerbar.

Auch hier kommt ein einheitliches Transportkonzept zum Ausdruck. Sobald die Wareneingangs-Stückgüter auf den Transportträgern platziert sind, ist ihr Ort eindeutig definiert und verfolgbar. Es kommt zu keiner Durchmischung von bereits erfassten Wareneingangs-Stückgütern mehr, wie es z.B. bei den herkömmlichen Transportbehältern der Fall war, die an die automatenintegrierten Vereinnahmungsstationen der herkömmlichen Automaten transportiert wurden.

Außerdem ist es von Vorteil, wenn das System ferner mindestens eine Transportträger-Pufferstation aufweist, die innerhalb des zumindest einen Automaten angeordnet ist, wobei ein Regalbediengerät des zumindest einen Automaten entlang der Pufferstation beweglich ist, um einzulagernde Wareneingangs-Stückgüter von den Transportträgern zu greifen und an freie Lagerplätze, vorzugsweise chaotisch, abzugeben, wobei die Lagerplätze, in welche die einzulagernden Wareneingangs-Stückgüter bereits abgegeben wurden, als belegte Lagerplätze identifiziert werden und eine entsprechende Information, wie z.B. eine Artikel-ID, eine Regalfach-ID, eine Stückzahl, eine Lagerplatz-ID, oder Ähnliches, an die Referenz-Tabelle zwecks entsprechender Aktualisierung (und ggf. Quittierung) kommuniziert wird.

Die Referenz-Tabelle kann also immer den aktuellen Aufenthaltsort eines Stückguts eindeutig wiedergeben, selbst dann, wenn der finale Einlagerungsplatz noch nicht konkret festgelegt ist.

Vorzugsweise weist die Vereinnahmungsstation eine weitere Transportträger-Pufferstation auf.

Diese Maßnahme ermöglicht eine zeitliche Entkopplung der Beladung der Transportträger vom Transport der Transportträger zu den entsprechenden Automaten. Die Transportträger können bedarfsgerecht mit Stückgütern automatenspezifisch beladen werden. Die Transportträger werden vorzugsweise erst dann zu ihrem zugeordneten Automaten transportiert, wenn sie vollständig mit Wareneingangs-Stückgütern gefüllt sind, die einzulagern sind.

Bei einer weiteren bevorzugten Ausführungsform ist jede der Transportträger-Pufferstationen eingerichtet, die Transportträger isoliert, d.h. losgelöst, vom Transportsystem, vorzugsweise in einem regalartigen Gestell mit mindestens einer Ebene aufzunehmen, zu puffern und später wieder an das Transportsystem abzugeben.

Das Transportsystem muss also nicht angehalten werden, um die Wareneingangs-Stückgüter in die Lagerplätze einzulagern. Das Transportsystem, insbesondere das FTF, kann also kontinuierlich weiter betrieben werden, was in einer höheren Leistung resultiert. Dies ist insbesondere dann von Vorteil, wenn mehrere Automaten parallel befüllt werden müssen. In diesem Fall ist das Transportsystem dennoch in der Lage, eine ausreichende Anzahl von beladenen Transportträgern zu den entsprechenden Automaten zu bringen, insbesondere wenn deren Beladung bereits erledigt wurde.

Weiter ist es von Vorteil, wenn die Datenverarbeitungsanlage ferner eingerichtet ist, basierend auf Stückgut-Bedarfsmeldungen, die (automatenspezifisch) von einer Lagerverwaltung erzeugt werden, um die Automaten initial und/oder erneut mit Stückgütern zu befüllen, Wareneingangs-Stückgütern freie, d.h. unbelegte, Ablageplätze zuzuweisen und die Ablageplätze in der Vereinnahmungsstation, vorzugsweise über ein Bildschirm oder Beamer, anzuzeigen, sobald ein entsprechendes Wareneingangs-Stückgut und der entsprechende Transportträger bei der Vereinnahmungsstation zur Beladung bereitstehen.

In diesem Fall lenkt das System den Mitarbeiter während der Beladung der Transportträger. Das System hat in diesem Fall vorab bestimmt, wo die Wareneingangs-Stückgüter bzw. auf welchen der Transportträger die Wareneingangs-Stückgüter zu platzieren sind. Auch die Zieladresse des entsprechenden Transportträgers ist vorab bestimmt. Diese Vorgehensweise ist insbesondere dann von Vorteil, wenn im Wareneingang mehrere unterschiedliche Wareneingangs-Stückgüter angeliefert wurden und die Reihenfolge der Bearbeitung der angelieferten Wareneingangs-Stückgüter unbekannt ist. In diesem Fall ist es irrelevant, zu welchem Zeitpunkt eines der Wareneingangs-Stückgüter zur Bearbeitung ansteht.

Außerdem ist es von Vorteil, wenn der mindestens eine Automat wechselbare Regalböden aufweist und die Transportträger ferner so ausgebildet sind, dass die Transportträger gegen die Regalböden austauschbar sind.

In diesem Fall ist es nicht erforderlich, dass die einzulagernden Wareneingangs-Stückgüter einzeln gegriffen und innerhalb des Automaten umgesetzt und eingelagert werden. Innerhalb des Automaten können die Transportträger insgesamt umgesetzt werden, so dass die Einlagerungsleistung deutlich erhöht ist, weil viele einzulagernde Wareneingangs-Stückgüter gleichzeitig eingelagert werden.

In diesem Zusammenhang ist es von Vorteil, wenn innerhalb des Automaten eine automatische Verdichtung stattfindet, so dass leere sowie vollere Regalböden bzw. Transportträger durch Umsetzen der eingelagerten Stückgüter innerhalb des Automaten erzeugt werden. Dies hat den Vorteil, dass möglichst keine teilbefüllten Transportträger zurück zum Wareneingang transportiert werden.

Die oben erwähnte Aufgabe wird ferner gelöst durch ein Verfahren gemäß Anspruch 13.

Vorzugsweise umfasst das Verfahren ferner ein Umsetzen des Wareneingangs-Stückguts vom Transportträger in dem Automaten auf den ausgewählten Lagerplatz basierend auf der entsprechenden Lagerplatz-Kennung durch ein Regalbediengerät.

Ferner wird ein Lager- und Kommissioniersystem zum vollautomatisierten Kommissionieren von Stückgütern offenbart, das aufweist: einen Wareneingangs-Bereich, vorzugsweise inklusive einer Vereinnahmungsstation; mehrere Kommissionier-Bereiche, wobei jeder der Kommissionier-Bereiche zur Kommissionierung von Stückgütern einer anderen Kategorie eingerichtet ist und wobei in jedem der Kommissionier-Bereiche im Wesentlichen Stückgüter einer einzigen der Kategorien gelagert und kommissioniert werden; einen Warenausgangs-Bereich, vorzugsweise inklusive Konsolidierung, Verpackung, Versand und Ähnlichem; ein Transportsystem, das die Bereiche materialflusstechnisch miteinander verbindet und das, vorzugsweise ausschließlich ein fahrerloses Transportsystem (FTS) mit einer Vielzahl von, vorzugsweise autonom verfahrbaren, fahrerlosen Transportfahrzeugen (FTF) darstellt, wobei die FTF eingerichtet sind, die die Zielladungsträger, wie z.B. Auftragsbehälter, zu tragen sowie zwischen den Bereichen und insbesondere innerhalb der Bereiche zu transportieren; und eine Steuereinrichtung, die zentral oder dezentral ausgebildet sein kann, und die eingerichtet ist, jedem der Kommissionieraufträge, der Stückgüter aufweist, die in unterschiedlichen Kommissionier-Bereichen gelagert sind und dort zu kommissionieren sind, einen einzigen der Zielladungsträger zuzuweisen, der dann von der Steuereinrichtung einem der FTF zugewiesen wird, für welches ein entsprechender Transportauftrag erzeugt wird, so dass das eine zugewiesene FTF alle Stückgüter des entsprechenden Kommissionierauftrags, die in den entsprechenden Kommissionier-Bereichen kommissioniert werden, mittels des einzigen Ladungszielträgers in oder bei den entsprechenden Kommissionier-Bereichen abholt und in den Warenausgangs-Bereich transportiert. Vorzugsweise werden Nachschub-Stückgüter, die zum initialen oder erneuten Befüllen eines der Kommissionier-Bereiche benötigt werden und die bereits im Wareneingangs-Bereich vereinnahmt wurden, mittels der FTF in den entsprechenden Kommissionierbereich transportiert und dort automatisch eingelagert.

Insbesondere werden die Nachschub-Stückgüter im Wareneingangsbereich erfasst und, vorzugsweise einzeln, auf die Transportträger umgeladen, die die FTF in den entsprechenden Kommissionier-Bereich transportieren, wobei die Ablageplätze der Nachschub-Stückgüter auf den Transportträgern durch die Steuereinrichtung verfolgt werden.

Auch ist es von Vorteil, wenn einer der Kommissionier-Bereiche mindestens einen, vorzugsweise vollautomatischen, Kommissionier-Automaten aufweist, der wiederum aufweist: ein Regal, das eine Vielzahl von Regalfächern aufweist, die übereinander und/oder nebeneinander angeordnet sind, wobei jedes der Regalfächer einen Regalboden aufweist, auf welchem die Artikel, vorzugsweise ladungsträgerlos, einfach- oder mehrfachtief nebeneinander lagerbar sind; mindestens eine Puffervorrichtung, die eine Sammeleinrichtung mit einer Aufnahmeöffnung und einer automatisierten Abgabevorrichtung aufweist, wobei die Abgabevorrichtung eingerichtet ist, gesammelte Stückgüter abzugeben; und ein Regalbediengerät, das in einer Längsrichtung des Regals beweglich ist und das eingerichtet ist, die Stückgüter in einer Querrichtung einzeln in bzw. aus jedem der Regalfächer ein- und auszulagern und an die Aufnahmeöffnungen abzugeben.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Systems der Erfindung;
- Fig. 2: eine perspektivische Ansicht einer exemplarischen Vereinnahmungsstation;
- Fig. 3: eine perspektivische Ansicht eines isoliert dargestellten Kommissionier-Automaten;
- Fig. 4: eine gebrochene Draufsicht auf den Kommissionier-Automaten der Fig. 3;
- Fig. 5: eine Seitenansicht auf eine isoliert dargestellte Transportträger-Pufferstation;
- Fig. 6: eine Referenz-Tabelle; und

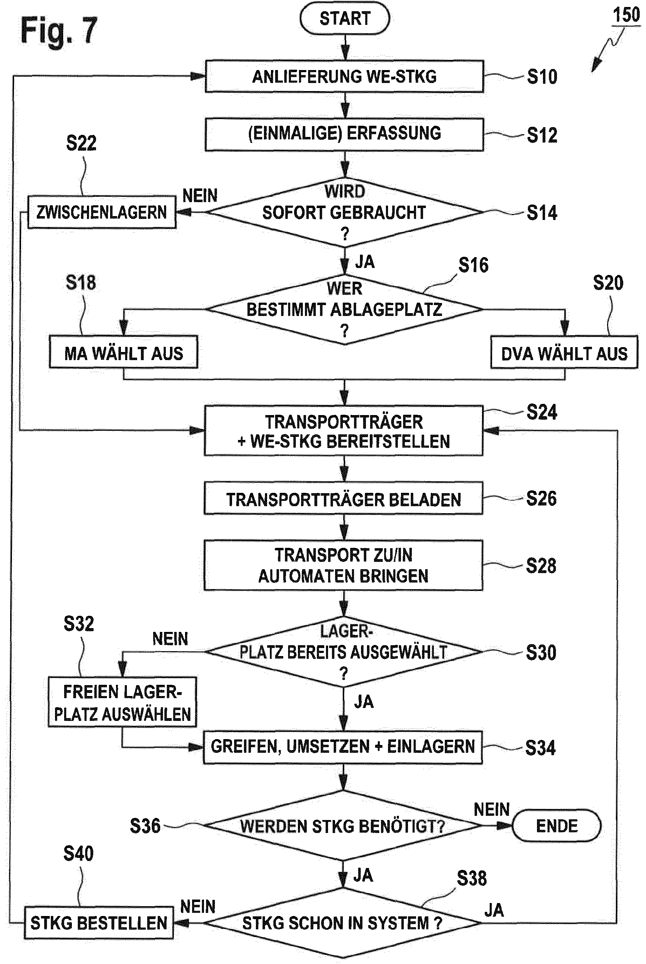

- Fig. 7: ein Flussdiagramm für ein Verfahren zum Befüllen eines Kommissionierautomaten.

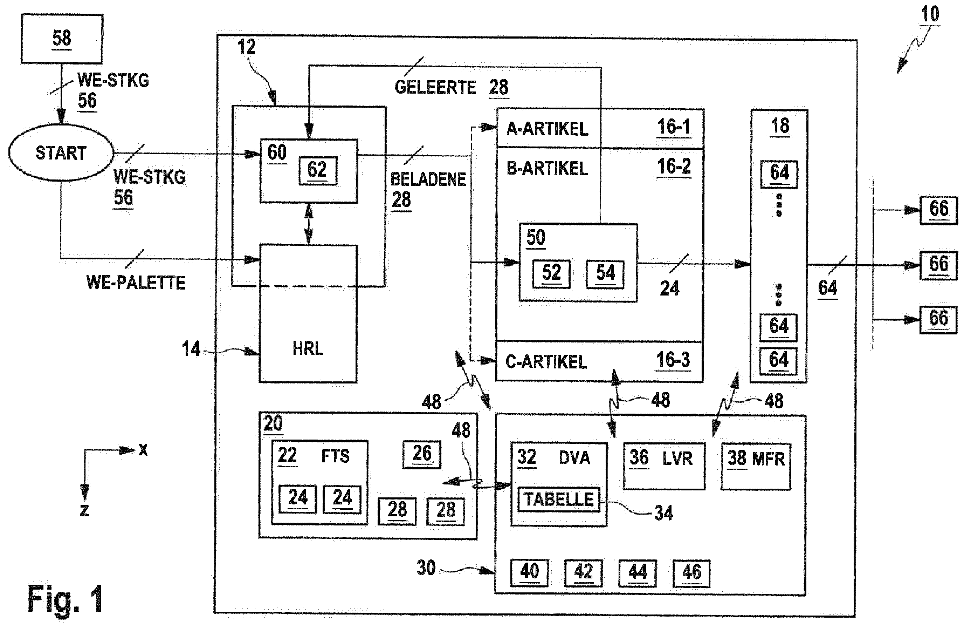

Fig. 1 zeigt ein Blockdiagramm eines Lager- und Kommissioniersystems 10 der Erfindung, das nachfolgend kurz auch nur als System 10 bezeichnet werden wird. Es versteht sich, dass die nachfolgend beschriebenen Komponenten des Systems 10 in Form von Hardware, in Form von Software oder als Kombination von Hardware und Software implementiert sind.

Das System 10 weist einen Wareneingangs-Bereich (WE-Bereich) 12, ein optionales Langzeitlager 14 mit z.B. einem Hochregallager (HRL) sowie einen Kommissionierbereich 16 auf. Der Kommissionierbereich 16 kann unterteilt sein, z.B. nach Entnahmehäufigkeiten bzw. Zugriffshäufigkeiten. In der Fig. 1 ist der Kommissionierbereich 16 dreigeteilt. Ein erster Kommissionierbereich 16-1 dient zur Kommisisonierung der eingangs erwähnten A-Artikel. Ein zweiter Kommissionierbereich 16-2 dient zur Kommissionierung von B-Artikeln. Ein dritter Kommissionierbereich 16-3 dient zur Kommissionierung von C-Artikeln. Es versteht sich, dass die Unterteilung der Bereiche 16-1 bis 16-3 nach Zugriffshäufigkeiten willkürlich ist. Es versteht sich, dass mehr oder weniger als die aufgezeigten Zugriffshäufigkeitskategorien A, B und C benutzt werden können. Ferner versteht es sich, dass die Kommissionierbereiche 16-1 bis 16-3 unterschiedlich dimensioniert sein können. Die Kommissionierbereiche 16-1 bis 16-3 können sich überlappen. Jeder der Kommissionierbereiche 16-1 bis 16-3 dient zur Kommissionierung und zur Bevorratung von Stückgütern (STKG) von im Wesentlichen einer einzigen Zugriffshäufigkeitskategorie. Dennoch kann es vorkommen, dass die Kommissionierbereiche 16-1 bis 16-3 einige wenige Stückgüter einer anderen Zugriffshäufigkeitskategorie enthalten, da eine kategoriereine Bevorratung nicht immer möglich ist.

Das System 10 weist ferner einen Warenausgangs-Bereich (WA-Bereich) 18 auf, der häufig auch die Funktion eines Versand-Bereichs übernimmt, wo kommissionierte Stückgüter gepackt und versandfertig gemacht werden.

Außerdem weist das System 10 ein Transportsystem 20 auf, mit dem die Stückgüter vom Wareneingang bis zum Warenausgang durch das System 10 transportiert werden, wie es nachfolgend noch näher erläutert werden wird. Der Transport der Stückgüter innerhalb des Systems 10 erfolgt vorzugsweise ausschließlich durch das Transportsystem 20. Das Transportsystem 20 weist, vorzugsweise ausschließlich, ein fahrerloses Transportsystem (FTS) 22 mit fahrerlosen Transportfahrzeugen (FTF) 24 auf, von denen in der Fig. 1 exemplarisch zwei FTF 24 gezeigt sind. Es versteht sich, dass das FTS 22 üblicherweise eine große Anzahl von FTF 24 umfasst. Das Transportsystem 20 kann zusätzlich eine optionale, stationäre Fördertechnik 26 (z.B. Stetigförderer wie Rollenförderer, Bandförderer, Kettenförderer, Hängeförderer oder Ähnliches) aufweisen. Außerdem weist das Transportsystem 20 eine Vielzahl von Transportträgern 28 auf, von denen in der Fig. 1 exemplarisch nur zwei dargestellt sind und die nachfolgend noch näher beschrieben werden. Ein Materialfluss innerhalb des Systems 10 kann generell nur durch die FTF 24, nur durch die Fördertechnik 26 oder durch eine Mischform der beiden erfolgen.

Das System 10 weist ferner eine Steuereinrichtung 30 auf, die zentral oder dezentral implementiert sein kann, z.B. durch eine Vielzahl von Computern (nicht gezeigt) und/oder Steuermodulen. Die Steuereinrichtung 30 ist ein Beispiel für eine Implementierung durch eine Kombination von Hardware und Software. Die Steuereinrichtung 30 weist mindestens eine Datenverarbeitungsanlage (DVA) 32 auf, die eine Referenz-Tabelle 34 verwaltet und aktualisiert, wie es nachfolgend noch näher beschrieben werden wird. Die Referenz-Tabelle 34 kann in einem (nicht dargestellten) Speicher der DVA 32 hinterlegt sein. Die Tabelle wird zur Referenzierung von Orten benutzt. Wie die Steuereinrichtung 30 selbst kann die DVA 32 systemübergreifend oder als Komponente (Hard- und/oder Software) der nachfolgend noch näher beschriebenen Automaten 50 sein.

Die Steuereinrichtung 30 und/oder die DVA 32 kann ferner einen Lagerverwaltungsrechner (LVR) 36 aufweisen, der mit einer entsprechenden Lagerverwaltungssoftware betrieben wird, um z.B. einen Stückgut-Bestand innerhalb des Systems 10 zeitaktuell zu verfolgen. Die Steuereinrichtung 30 und/oder die DVA 32 kann ferner einen Materialflussrechner (MFR) 38 aufweisen, der einen Materialfluss, insbesondere einen Fluss der Stückgüter, durch das System 10 regelt. Die oben erwähnte Lagerverwaltungssoftware kann ein Lagerplatzverwaltungsmodul 40 umfassen. Die Steuerungseinrichtung 30 und/oder die DVA 32 kann ferner ein Navigationsmodul 42, ein Verkehrsregelungsmodul 44 und/oder ein Routenplanungsmodul 46 umfassen, die für Bewegungen der FTF 24 durch das System 10 benötigt werden. Es versteht sich, dass die Steuerungseinrichtung 30 und/oder die DVA 32 weitere Module umfassen kann, um die Funktionsfähigkeit des Systems 10 sicherzustellen. Außerdem versteht es sich, dass das Navigationsmodul 42, das Verkehrsregelungsmodul 44 und das Routenplanungsmodul 46 auch Teil des Transportsystems 20 sein könnten. Die Module 42-46 wurden lediglich zur Vereinfachung einer Darstellung im Bereich der Steuereinrichtung 30 dargestellt. Dies gilt auch für die anderen dargestellten Komponenten der Steuereinrichtung 30, von denen jede zentral oder dezentral implementiert sein kann. Die gezeigten Komponenten der Steuereinrichtung 30 und/oder der DVA 32 können untereinander und mit den anderen gezeigten Komponenten des Systems 10 über Kommunikationskanäle 48 kommunizieren, d.h. Daten austauschen, die in der Fig. 8 durch Doppelpfeile 48 angedeutet sind. Die Kommunikationskanäle 48 können verdrahtet und/oder drahtlos implementiert sein.

Ein Kernelement der Erfindung ist in einem Kommissionier-Automaten 50 zu sehen, der in der Fig. 1 exemplarisch im zweiten Kommissionierbereich 16-2 für die B-Artikel angeordnet ist. Es versteht sich, dass der Kommissionier-Automat 50 auch in jedem anderen Kommissionierbereich 16 angeordnet sein könnte. Ferner versteht es sich, dass das System 10 auch mehr als einen Kommissionier-Automaten 50 aufweisen kann, die dann auch in unterschiedlichen Kommissionierbereichen 16-1 bis 16-3 angeordnet sein können. Bei dem Kommissionier-Automaten 50 handelt es sich um einen eingangs erwähnten Vollautomaten. Der Kommissionierautomat 50 weist vorzugsweise mindestens ein Regal 52 sowie mindestens ein Regalbediengerät 54 auf, welches auch als Einebenen-Regalbediengerät (Shuttle) ausgebildet sein kann. Der Kommissionier-Automat 50 ist eingerichtet, Stückgüter ladungsträgerlos zu bevorraten, wie es nachfolgend noch näher beschrieben wird. Der Kommissionier-Automat 50 ist ferner eingerichtet, die Stückgüter automatisiert einzulagern, automatisiert gemäß Kommissionieraufträgen (einstufig oder zweistufig) einzusammeln und an hier nicht dargestellte Sammeleinrichtungen 112 abzugeben, wie es nachfolgend noch näher erläutert werden wird. Der Kommissionier-Automat 50 bildet also ein in sich geschlossenes System, dem die Stückgüter von außen zwecks Einlagerung zugeführt werden und welches kommissionierte Stückgüter selbstständig ausgibt.

Nachfolgend wird ein Materialfluss von Stückgütern durch das System 10 grob beschrieben.

Wareneingangs-Stückgüter (WE-STKG) 56 werden von einem oder mehreren Lieferanten 58 an das System 10 von außen geliefert. Die Anlieferung darf typenrein oder durchmischt erfolgen. Dies bedeutet, dass die Stückgüter von den Lieferanten 58 nicht so vorbereitet werden müssen, dass die Stückgüter gemäß einem Bedarf (Nachschub) des Kommissionier-Automaten 50 vorkonfiguriert sein müssen. So können z.B. Wareneingangs-Stückgüter 56 eines einzigen Artikeltyps in einer großen Stückzahl z.B. auf einer Palette angeliefert werden (siehe "Start"). Abhängig davon, in welcher Form die Wareneingangs-Stückgüter 56 angeliefert werden, werden die Wareneingangs-Stückgüter 56 entweder direkt in eine Vereinnahmungsstation 60 bewegt oder im Langzeitlager 14 zwischengespeichert, bis ein entsprechender Bedarf des Kommissionier-Automaten 50 besteht. Die Wareneingangs-Stückgüter 56 können dann bedarfsorientiert aus dem Langzeitlager 14 zur Vereinnahmungsstation 60 und von dort auch wieder zurück transportiert werden. Der Transport der Wareneingangs-Stückgüter 56 kann bis zu diesem Zeitpunkt von Förderzeugen (z.B. Gabelstapler, Ameisen, Fördertechnik oder Ähnliches) durchgeführt werden, die nicht Teil des Transportsystems 20 sind.

In der Vereinnahmungsstation 60 werden die Wareneingangs-Stückgüter 56, vorzugsweise einmalig, erfasst, insbesondere um die Richtigkeit und Vollständigkeit der Lieferung des Lieferanten 56 zu überprüfen (Eingangsprüfung). Die Vereinnahmungsstation 60 weist zu diesem Zweck eine Erfassungseinrichtung 62 (z.B. Scanner, Kamera, Tastatur oder Ähnliches) auf. Nach einer erfolgten Erfassung, d.h. insbesondere einer datentechnischen Identifizierung und Registrierung, der Wareneingangs-Stückgüter 56 werden die Wareneingangs-Stückgüter 56 auf die Transportträger 28 umgeladen. Beladene Transportträger 28 werden vorzugsweise mit den FTF 24 von der Vereinnahmungsstation 60 zum Kommissionier-Automaten 50 transportiert, und zwar insbesondere ausschließlich durch das FTS 22. Es versteht sich, dass beladene Transportträger 28 mittels den FTF 24 auch in die anderen Kommissionierbereiche 16 transportiert werden können, wie es in Fig. 1 durch Strichlinienpfeile angedeutet ist. Die beladenen Transportträger 28 enthalten die Wareneingangs-Stückgüter 56, die (einmalig) erfasst sind und die in den Automaten 50 einzulagern sind, insbesondere um eine (initiale oder erneute) Befüllung des Automaten 50 sicherzustellen. Transportträger 28, die vollständig oder teilweise geleert wurden bei dem Kommissionierautomaten 50, werden mit den FTF 24 zurück zur Vereinnahmungsstation 60 transportiert. Stückgüter, die durch den Kommissionier-Automaten 50 kommissioniert wurden, d.h. also kommissionierte Stückgüter, können ebenfalls durch das Transportsystem 20 aus dem Kommissionierbereich 16 in den Warenausgangs-Bereich 18 transportiert werden. Dieser Transport erfolgt vorzugsweise ebenfalls ausschließlich durch das FTS 22. Sobald die kommissionierten Stückgüter entsprechend versandfertig sind, indem z.B. in entsprechend adressierte Versandbehälter 64 umgepackt wurden, verlassen die Stückgüter das System 10 in Richtung von Kunden 66, von denen in der Fig. 1 exemplarisch drei dargestellt sind. Damit endet der (Material-)Fluss der Stückgüter durch das System 10.

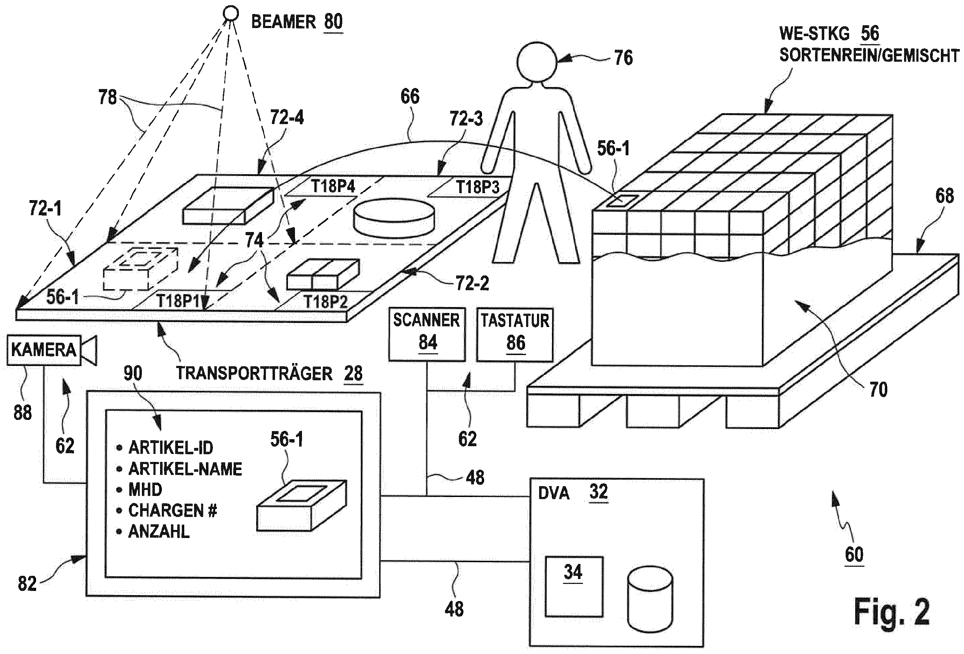

Fig. 2 zeigt eine perspektivische Darstellung einer exemplarischen Vereinnahmungsstation 60, wie sie im System 10 der Fig. 1 eingesetzt werden kann. Die Fig. 2 veranschaulicht einen manuellen Beladungsvorgang (vergleiche Pfeil 66), bei dem ein Wareneingangs-Stückgut 56 von einer (sortenrein oder gemischt beladenen) Wareneingangspalette 68, die einen Wareneingangs-Stückgutstapel 70 trägt, auf einen der Transportträger 28 des Transportsystems 20 (vergleiche Fig. 1) umgeladen wird. Es versteht sich, dass die Transportträger 28 ergänzend und alternativ auch automatisiert beladbar sind. Im gezeigten Beispiel soll das Wareneingangs-Stückgut 56-1 vom Stapel 70 auf einem freien (d.h. unbelegten) Ablageplatz 72-1 des Transportträgers 28 platziert werden, wie es durch Strichlinien angedeutet ist. Generell gilt, dass jeder der Transportträger 28 des Systems 10 mindestens einen, vorzugsweise mehrere, eindeutig unterscheidbare und identifizierbare Ablageplätze 72 aufweist. Der Transportträger 28, der in der Fig. 2 gezeigt ist, weist z.B. vier Ablageplätze 72-1 bis 72-4 auf. Die Ablageplätze 72 können z.B. mit aufgedruckten Linien visuell unterscheidbar gekennzeichnet sein. Die Ablageplätze 72 des Transportträgers 28 der Fig. 2 sind mit einer individualisierenden Ablageplatz-Kennung 74 gekennzeichnet. Bei dem in der Fig. 2 gezeigten Transportträger handelt es sich z.B. um den Träger (T) mit der individualisierenden Transportträgerkennung "T18", so dass die (Ablage)Plätze (P) 72-1 bis 72-4 mit den Ablageplatz-Kennungen 74 "T18P1" bis "T18P4" gekennzeichnet sind. Es versteht sich, dass die Ablageplatz-Kennung 74 nur optional visuell dargestellt sein muss, um einem Mitarbeiter 76, der die Wareneingangs-Stückgüter 56 gemäß dem Pfeil 66 umsetzen soll, ein Auffinden eines vorgegebenen Ablageplatzes 72 zu erleichtern. Ein vorgegebener Ablageplatz 72 kann durch die Steuereinrichtung 30 (vergleiche Fig. 1) vorab bestimmt werden, z.B. um eine automatenspezifische Beladung des Transportträgers 28 zu erzielen. In diesem Fall wählt die Steuereinrichtung 30 bzw. die DVA 32 einen (freien) Ablageplatz 72 auf einem der Transportträger 28 aus, der dann zu dem Automaten 50 transportiert wird, der das umzuladende Wareneingangs-Stückgut 56-1 benötigt. Wenn die Ablageplätze 72 keine visuellen Ablageplatz-Kennungen 74 tragen, kann dem Mitarbeiter 76 der gewünschte Ablageplatz 72 z.B. mittels Lichtstrahlen 78 aus z.B. einem Beamer 80 angezeigt werden (Put-to-Light). Ferner ist es möglich, den zu beladenden Transportträger 28 inklusive dem vorgegebenen Ablageplatz 72-1 graphisch auf einer Anzeigevorrichtung 82, wie z.B. einem Bildschirm oder Monitor, darzustellen. Eine weitere Möglichkeit besteht darin, dem Mitarbeiter 76 den gewünschten Ablageplatz 72 mittels Sprache mitzuteilen (Put-by-Voice). Andere Verfahren zum Führen bzw. Lenken des Mitarbeiters 76 sind dem Fachmann bekannt (z.B. Put-by-Vision).

Generell werden die Wareneingangs-Stückgüter 76 (einmalig) erfasst und identifiziert, bevor sie auf die Transportträger 28 umgeladen werden. Im Beispiel der Fig. 2 sind exemplarisch drei unterschiedliche Erfassungseinrichtungen 62 (vergleiche Fig. 1) gezeigt, die alternativ oder ergänzend verwendet werden können, um die Wareneingangs-Stückgüter 56 zu erfassen. In der Fig. 2 ist ein Scanner 84, eine Tastatur 86 sowie eine Kamera 88 als exemplarische Erfassungseinrichtung 62 gezeigt. Die Erfassungseinrichtung 62 erfasst zumindest ein Attribut 90, welches das umzuladende Wareneingangs-stückgut 56 kennzeichnet. Das kennzeichnende Attribut 90 kann eine oder mehrere Komponenten aufweisen. Das Attribut 90 kann z.B. durch eine Artikelkennung (Artikel-ID), einen Artikelnamen, ein Mindesthaltbarkeitsdatum (MHD) und/oder eine Chargennummer (Charge #) repräsentiert werden, wie es exemplarisch graphisch auf dem Bildschirm der Fig. 2 gezeigt ist. Das Attribut 90 kann z.B. gescannt werden, wenn es als Strichcode vorliegt. Eine Artikelnummer bzw. eine Artikel-ID kann manuell über die Tastatur 86 eingegeben werden. Die Kamera 88 kann Bilder des umzuladenden Wareneingangs-Stückgut 56 erzeugen, die mittels Bilderkennungsalgorithmen zur Identifizierung des umzuladenden Wareneingangs-Stückguts 56 benutzt werden. Die Anzeigevorrichtung 82 zeigt das Ergebnis der Erfassung in Form der Attribute 90 und ggf. in Form einer graphischen Abbildung des umzuladenden Wareneingangs-Stückguts 56-1 an. Der Mitarbeiter 76 kann so verifizieren, dass der Erfassungsvorgang, und ggf. auch der Identifizierungsvorgang, erfolgreich war.

Der Mitarbeiter 76 kann im Falle einer willkürlichen Beladung der Transportträger 28 das erfasste Wareneingangs-Stückgut 56-1 auf einen beliebigen freien Ablageplatz 72 legen. Im Beispiel der Fig. 2 ist lediglich der erste Abgabeplatz 72-1 noch nicht belegt. Anschließend kommuniziert der Mitarbeiter 76 die Abgabeplatz-Kennung 74 an die DVA 32, indem der Mitarbeiter 76 die Kennung 74 z.B. über die Tastatur 86 eingibt. Die Kennung 74 könnte alternativ auch mittels Sprache oder Bilderkennung an die DVA 32 kommuniziert werden, um die Referenz-Tabelle 34 entsprechend zu aktualisieren. Eine weitere Möglichkeit der Erkennung einer manuell gewählten Abgabeposition stellt ein Einsatz von Funktechnologie (RFID- und/oder NFC-Sender/Empfänger am Abgabeplatz 72 und oder an der Hand, dem Arm oder am Finger des Mitarbeiters 76) dar. Natürlich wird der DVA 32 auch das Attribut 90 des gerade umzuladenden Wareneingangs-Stückguts 56 kommuniziert. Die Aktualisierung der Referenz-Tabelle 34 wird nachfolgend noch näher beschrieben werden.

Dies bedeutet mit anderen Worten, dass die freien Ablageplätze 72 entweder willkürlich vom Mitarbeiter 76 ausgewählt und deren Kennungen 76 anschließend an die DVA 32 kommuniziert werden oder die Steuereinrichtung 30 bzw. die DVA 32 auf Basis eines Kommissionierautomaten-spezifischen Bedarfs (vorab) Transportträger 28 auswählt, die dem bedürftigen Kommissionierautomaten 50 zugeordnet werden und die freie Ablageplätze 72 aufweisen. Ferner versteht es sich, dass generell mehrere Wareneingangs-Stückgüter 56 (des gleichen Typs) auf den gleichen Ablageplatz 72 abgelegt werden können, wobei diese Information dann von der DVA 32 mitverfolgt wird. Eine mehrfache Beladung des gleichen Ablageplatzes 72 ist insbesondere dann sinnvoll, wenn die einzulagernden Wareneingangs-Stückgüter 76 mehrfachtief in Lagerplätze des Kommissionier-automaten 50 eingelagert werden sollen.

Die Transportträger 28 sind generell so ausgebildet, dass Relativbewegungen der Stückgüter während eines Transports innerhalb des Systems 10 ausgeschlossen sind. Die Transportträger 28 können z.B. mit einer rutschhemmenden Schicht versehen sein (z.B. aus Gummi oder einem ähnlichen Material). Die Ablageplätze 72 können in einer Oberfläche der Transportträger 28 z.B. leicht vertieft ausgebildet sein. Generell gilt, dass die Ablageplätze 72 voneinander getrennt sind. Die Ablageplätze 72 überlappen sich nicht. Die Ablageplätze 72 sind eindeutig unterscheidbar. Die Abgabeplätze 72 können aber unterschiedlich dimensioniert sein. Die Abgabeplätze 72 können einen Rand aufweisen, der aus einer Oberfläche der Transportträger 28 hervorsteht, um zu verhindern, dass sich die Stückgüter in dem Bereich eines benachbarten Ablageplatzes 72 bewegen.

Ferner gilt generell, dass die Transportträger 28 durch das Transportsystem 20 von der mindestens einen Vereinnahmungsstation 60 zu dem Kommissionierautomaten 50 transportiert werden. Zu diesem Zweck kann das Transportsystem 20 z.B. Stetigförderer (konventionelle Fördertechnik wie z.B. Rollenförderer, Bandförderer, Kettenförderer, Hängeförderer und Ähnliches) einsetzen. Bevorzugt ist aber der Einsatz der autonom verfahrbaren FTF 28. Die FTF 28 können beliebige Wege innerhalb des Systems 10 zurücklegen. Die FTF 28 können auch zum Einsammeln und Transportieren von kommissionierten Stückgütern eingesetzt werden, so dass man ein einheitliches Transportkonzept erhält. Wenn die FTF 28 kommissionierte Stückgüter transportieren, erfolgt dies vorzugsweise nicht mit den Transportträgern 28, sondern mit Auftragsbehältern bzw. mit den Versandbehältern 64 (vergleiche Fig. 1). Die FTF 28 können dann die kommissionierten Stückgüter aus allen Kommissionierbereichen 16 einsammeln, so dass kein zusätzlicher Konsolidierungsschritt benötigt wird.

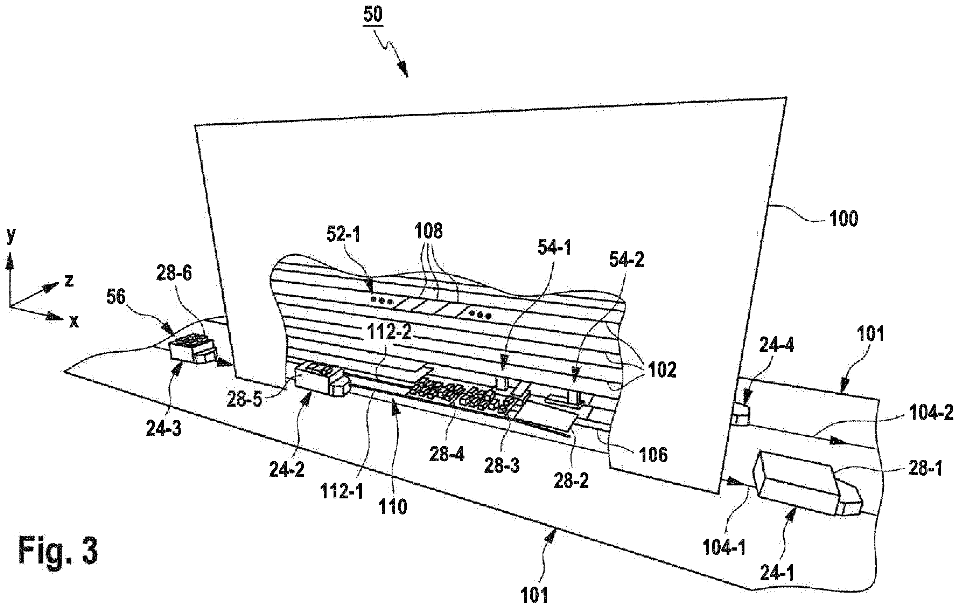

Fig. 3 zeigt eine perspektivische Ansicht des isoliert dargestellten Kommissionier-Automaten 50, wie er in den Kommissionierzonen 16-1 bis 16-3 der Fig. 1 zum Einsatz kommen kann. Der Kommissionier-Automat 50 (nachfolgend auch kurz nur als "Automat 50" bezeichnet) ist von der gleichen Gattung wie der in der WO 2015/039818 A1 offenbarte Vollautomat. Der Automat 50 der Fig. 3 unterscheidet sich jedoch von den herkömmlichen Vollautomaten dadurch, dass das Transportsystem 20 (vergleiche Fig. 1), in Form des FTS 22 mit seinen FTF 24, zumindest zum Zwecke einer Einlagerung der Wareneingangs-Stückgüter 56 durch den Automaten 50 hindurch verläuft, um die Transportträger 28, die mit einzulagernden Wareneingangs-Stückgütern 56 beladen sind (vergleiche Transportladungsträger 28-3 bis 28-6 in Fig. 3) in den Automaten 50 zu verbringen. Es versteht sich, dass die Transportträger 28 auch mit einem anderen Fördersystemtyp (vergleiche Fördersystem 26 in Fig. 1) in den Automaten 50 hinein und aus dem Automaten 50 heraus transportiert werden können. Vorzugsweise werden jedoch die FTF 24 eingesetzt, die sich auf einem Boden 101 entlang von (nicht dargestellten) Markierungsanteilen bewegen, wie es z.B. in der Patentanmeldung DE 10 2014 111 385 oder der DE 10 2014 111 394 beschrieben ist. Das hier verwendete FTS 22 mit seinen FTF 24 ist vorzugsweise von der in diesen beiden Patentanmeldungen beschriebenen Art.

Der Automat 50 der Fig. 3 ist als ein geschlossenes System ausgebildet, welches vollautomatisiert betrieben wird. Der Automat 50 weist ein äußeres Gehäuse 100 auf, um zu verhindern, dass Mitarbeiter 76 den Automaten 50 während eines Betriebs betreten. Der Automat 50 der Fig. 3 weist exemplarisch zwei Regale 52 auf, die in der Querrichtung Z eine (nicht näher gezeigte und bezeichnete) Regalgasse zwischen sich definieren, wo z.B. zwei Regalbediengeräte 54-1 und 54-2 entlang von Fahrschienen 106 längs der Regale 52 verfahrbar sind. In der Fig. 3 ist lediglich das eine Regal 52-1 der beiden Regale 52 innerhalb des geschnitten dargestellten Bereichs zu sehen. Die Regale 52 weisen eine Vielzahl von Regalböden 102 auf, die in der Höhenrichtung Y übereinander angeordnet sind. Die Regalböden 102 können in der Längsrichtung X unterteilt sein, d.h. modular aufgebaut sein (nicht in Fig. 3 dargestellt). Die Regalböden 102 repräsentieren eine Vielzahl von Lagerplätzen 108, von denen in der Fig. 3 exemplarisch drei Lagerplätze 108 gezeigt sind, die in der Längsrichtung X nebeneinander angeordnet sind. Die Lagerplätze 108 sind für eine einfachtiefe oder mehrfachtiefe Einlagerung der Wareneingangs-Stückgüter 56 ausgebildet. In der Fig. 3 sind alle Regalböden 102 bzw. alle Lagerplätze 108 unbelegt. Die Fig. 3 zeigt eine Situation, wie sie bei einer Initialbefüllung des Automaten 50 auftritt.

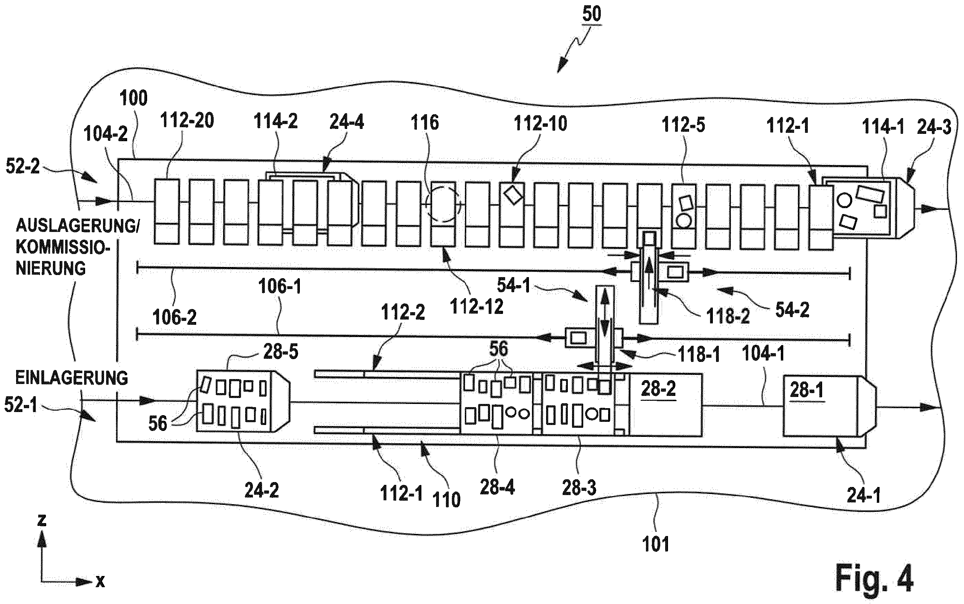

In der Fig. 3 sind drei FTF 24-1 bis 24-3 gezeigt, die zum Einlagern benutzt werden. Ferner ist ein weiteres FTF 24-4 gezeigt, welches zum Kommissionieren eingesetzt wird, wie es unter Bezugnahme auf Fig. 4 noch näher erläutert werden wird. Die FTF 24-1 bis 24-3 sowie die FTF 24-4 bewegen sich entlang von Fahrwegen 104-1 bzw. 104-2. Die Fahrwege 104-1 und 104-2 erstrecken sich durch den Automaten 50 hindurch. Die Fahrwege 104-1 und 104-2 erstrecken sich in dem in der Fig. 3 dargestellten Bereich entlang der Längsrichtung X. Die Fahrwege 104 erstrecken sich parallel zu den Fahrschienen 106 der RBG 54-1 und 54-2. Die Fahrschienen 106 sind in der Querrichtung Z beabstandet zu den Fahrwegen 104 angeordnet. Die Fahrschienen 106 sind in der Querrichtung Z beabstandet zueinander angeordnet.

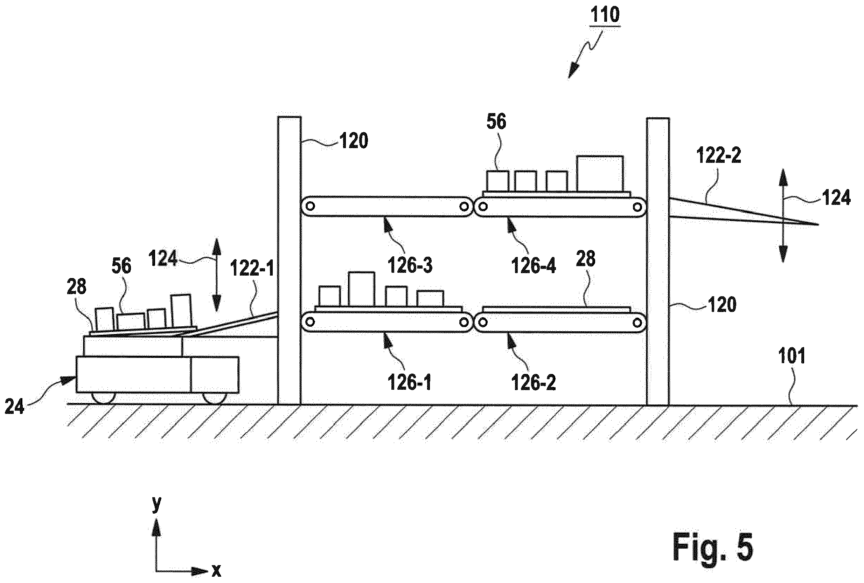

Die (Einlagerungs-)FTF 24-1 bis 24-3 kommen mit beladenen Transportträgern 28 (vergleiche Transportträger 28-3 bis 28-6 in Fig. 3) in dem Automaten 50 an. Die FTF 24-1 bis 24-3 werden aber auch zum Abtransport von leeren oder teilweisen geleerten Transportträgern 28 (vergleiche Transportträger 28-1 und 28-2 in Fig. 3) aus dem Automaten 50 heraus eingesetzt. Teilgeleerte Transportträger 28 können in andere (nicht in der Fig. 3 dargestellte) Automaten 50 zwecks Einlagerung der restlichen Wareneingangs-Stückgüter 56 verbracht werden. Generell können die Transportträger 28 Wareneingangs-Stückgüter 56 für unterschiedliche Automaten 50 tragen. Vorzugsweise werden die Transportträger 28 aber automatenspezifisch, d.h. für nur einen einzigen Automaten 50, mit Wareneingangs-Stückgütern 56 in der Vereinnahmungsstation 60 beladen. Leere Transportträger 28, die keine Stückgüter mehr enthalten, werden in die Vereinnahmungsstation 60 zur erneuten Beladung mit neuen Wareneingangs-Stückgütern 56 zurücktransportiert. Es versteht sich, dass das System 10 auch ein (in der Fig. 1 nicht gezeigtes) Pufferlager für die Transportträger 28 aufweisen kann. In einem derartigen Transportträger-Pufferlager können die Transportträger 28 vorrübergehend gelagert werden, um später an die Vereinnahmungsstation 60 und/oder an die Automaten 50 geliefert zu werden. Der Transportträger-Puffer wird vorzugsweise für den Fall eingesetzt, dass die Transportträger 28 automatenspezifisch insbesondere mit einer Vielzahl unterschiedlicher Wareneingangs-Stückgüter 56 gemäß jeweils vorab geplanten Beladungsschemata beladen werden. Ein exemplarischer Transportträger-Puffer wird unter Bezugnahme auf Fig. 5 noch näher beschrieben wreden.

Um zu vermeiden, dass die FTF 24 solange innerhalb des Automaten 50 verbleiben müssen, bis alle einzulagernden Wareneingangs-Stückgüter 56, die von dem oder den Transportträgern 28 auf dem jeweiligen FTF 24 angedient werden, können eine oder mehrere Transportträger-Pufferstationen 110 innerhalb des Automaten 50 vorgesehen werden. In der Fig. 3 ist exemplarisch eine Transportträger-Pufferstation 110 gezeigt.

Generell gilt, dass die Pufferstation 110 eingerichtet ist, die Transportträger 28 isoliert, d.h. getrennt von dem FTS 22 oder dem Fördersystem 26, aufzunehmen und abzugeben. Zu diesem Zweck kann jede der Pufferstationen 110 einen oder mehrere Förderer aufweisen. Die Pufferstation 110 der Fig. 3 weist zwei Riemen- oder Kettenförderer 112-1 und 112-2 auf, die sich im Wesentlichen in der Längsrichtung X erstrecken und die in der Querrichtung Z beabstandet zueinander angeordnet sind. Die Förderer 112-1 und 112-2 sind in einer Höhe angeordnet, so dass die FTF 24 unter der Pufferstation 110 hindurchfahren können. In einem nicht näher bezeichneten einleitenden Abschnitt und in einem ausleitenden Abschnitt sind die Förderer 112 gegenüber der Horizontalen derart geneigt, dass die Förderer 112 in ein nicht näher gezeigtes und bezeichnetes Lastaufnahmemittel der FTF 24 eingreifen, um die Transportträger 28 auszuheben bzw. abzugeben. Die Pufferstation 110 weist in der Längsrichtung X vorzugsweise eine Länge auf, die eine Pufferung von mehreren beladenen Transportträgern 28 hintereinander (vergleiche 28-3 und 28-4 in Fig. 3) erlaubt.

In der Fig. 3 ist die Pufferstation 110 unterhalb der Regalböden 102 des Regals 52-1 angeordnet. Einige der Regalböden 102, die sich in unmittelbarer Nähe in der vertikalen Richtung Y zu der Pufferstation 110 befinden, sind unterbrochen, um den RBG 54 ausreichend Raum zum Umsetzen der einzulagernden Wareneingangs-Stückgüter 56 von den beladenen Transportträgern 28 in leere Lagerplätze 108 zu geben. Die Pufferstation 110 ist ferner so angeordnet, dass die RBG 54 auf die einzulagernden Wareneingangs-Stückgüter 56 auf den Transportträgern 28 zugreifen können. Zu diesem Zweck können die Lastaufnahmemittel 118 der Regalbediengeräte 54 auch entsprechend ausgebildet sein (z.B. in der Querrichtung Z ausreichend ausfahrbar sein).

Fig. 4 zeigt den Automaten 50 der Fig. 3 in einer gebrochen dargestellten Draufsicht, wobei insbesondere der unterste Bereich des Automaten 50 gezeigt ist.

Eine Einlagerung der Wareneingangs-Stückgüter 56 erfolgt im Bereich des ersten Regals 52-1. Eine Auslagerung bzw. Kommissionierung der Stückgüter erfolgt unterhalb des zweiten Regals 52-2, wo eine Vielzahl von Sammeleinrichtungen 112 vorgesehen ist. Der Automat 50 weist z.B. 20 Sammelvorrichtungen 112-1 bis 112-20 auf, die vorzugsweise alle identisch ausgebildet sind. Die Sammelvorrichtungen 112 sind entlang des Fahrwegs 104-2 ausgerichtet und erstrecken sich im Wesentlichen in der Längsrichtung X. Die FTF 24-3 und 24-4 bewegen sich in der Fig. 4 von links nach rechts entlang des Fahrwegs 104-2 und unterfahren dabei in der Höhenrichtung Y die Sammelvorrichtungen 112. Die FTF 24-3 und 24-4 tragen jeweils einen Auftragsbehälter 114 zum Kommissionierauftrags-orientierten Einsammeln von Stückgütern. Hier kommt eine große Stärke des Systems 10 zum Ausdruck, weil die FTF 24 sowohl zum Einlagern als auch zum Auslagern bzw. Kommissionieren einsetzbar sind und somit ein einheitliches Transportkonzept realisierbar ist. Selbstverständlich könnte ergänzend auch die Fördertechnik 26 eingesetzt werden, z.B. für die Auslagerung, anstatt der FTF 24, so dass ein Mischform des Transportsystems 20 vorläge.

Die Sammeleinrichtungen 112 sind in der Höhenrichtung Y so angeordnet, dass die FTF 24 inklusive der Auftragsbehälter 114 unter den Sammelvorrichtungen 112 hindurchfahren können. Die Sammelvorrichtungen 112 sind jeweils mit einer hier nicht näher gezeigten und bezeichneten Abgabevorrichtung versehen (z.B. automatisierte Klappen oder Schieber im unteren Bodenbereich), um gesammelte Stückgüter automatisiert, vorzugsweise mittels Schwerkraft, an die entsprechenden Auftragsbehälter 114 abzugeben. Die FTF 24 können während einer Übergabe kontinuierlich unter den Sammelvorrichtungen 112 hindurchfahren. Die FTF 24 können aber auch kurzzeitig unter der jeweiligen Sammelvorrichtung 112 anhalten. Das FTF 24-3 trägt den Auftragsbehälter 114-1, der mit Stückgütern befüllt ist, die zuvor in einem oder mehreren der Sammelvorrichtung 112 gepuffert wurden. Die Sammelvorrichtungen 112-5 und 112-10 puffern aktuell Stückgüter, die von den Regalbediengeräten 54 aus Lagerplätzen 108 (vergleiche Fig. 3) ausgelagert und über Aufnahmeöffnungen 116 (vergleiche Sammelvorrichtung 112-12) verbracht wurden, um anschließend in die entsprechenden Sammelvorrichtung 112 abgegeben zu werden. Die Lastaufnahmemittel 118-1 und 118-2 der Regalbediengeräte 54-1 und 54-2 sind entsprechend ausgebildet. Die Lastaufnahmemittel 118 sind in der Fig. 4 exemplarischen in Form von nicht näher bezeichneten zangenförmigen Greifern ausgebildet, die in der Querrichtung Z in die Lagerplätze 108 ein- und ausfahren können und die in der Längsrichtung X aufeinander zu und voneinander weg bewegbar sind, um die Stückgüter von den Transportträgern 28 zu entnehmen, in die Lagerplätze 108 einzulagern und aus den Lagerplätzen 108 auszulagern. Das Lastaufnahmemittel 118-1 greift ein einzulagerndes Wareneingangs-Stückgut 56 vom Transportträger 28-3. Das Lastaufnahmemittel 118-2 des zweiten Regalbediengeräts 54-2 hat ein Stückgut aus einem der Lagerplätze 108 abgeholt, um dieses Stückgut an eine der Sammelvorrichtungen 112 abzugeben. Es versteht sich, dass die Lastaufnahmemittel 118 so ausgebildet sind, dass sie mit beiden Regalen 52-1 und 52-2 interagieren können.

Ferner versteht es sich, dass die RGB 54 auch Wareneingangs-Stückgüter 56 direkt von den Transportträgern 28 (vergleiche 28-3 und 28-4 in Fig. 4) herunterkommissionieren können (Cross Docketing), ohne dass die entsprechenden Wareneingangs-Stückgüter 56 zuvor eingelagert wurden. Hier kommt eine weitere besondere Stärke des Systems 10 zum Ausdruck, weil sehr viele Wareneingangs-Stückgüter 56 gleichzeitig bereitgestellt werden können, ohne diese vorher in die Lagerplätze 108 einlagern zu müssen. Diese Vorgehensweise kann zur Abfederung von Spitzenbelastungen sehr hilfreich sein.

Ferner versteht es sich, dass die Sammelvorrichtungen 112 sich auch nach außen erstrecken können, so dass die Auslagerungs-FTF 24 (vergleiche 24-3 und 24-4 in Fig. 4) nicht durch den Automaten 50 hindurch, sondern außen an dem Automaten 50 vorbeifahren können, um die eingesammelten Stückgüter aufzunehmen. Eine Integration sowohl der Einlagerungs-FTF 24 als auch der Auslagerungs-FTF 24 in den Automaten 50 hinein ist jedoch bevorzugt, weil sich dadurch die Lagerdichte erhöhen lässt. Es können mehrere Automaten 50 hintereinander und/nebeneinander, vorzugsweise dicht an dicht, positioniert werden. Bereiche außerhalb der Automaten 50 können ausschließlich für den Materialfluss innerhalb des Systems 10 genutzt werden. Bereiche, die an die Automaten 50 angrenzen, um eine Einlagerung abzuwickeln, werden nicht länger benötigt. Außerhalb der Automaten 50 fließt der Verkehr der FTF 24, weil die FTF 24, wenn überhaupt, nur innerhalb der Automaten 50 angehalten werden, um Stückgüter bzw. Transportträger 28 zu transferieren.

Fig. 5 zeigt eine Seitenansicht einer isoliert dargestellten Transportträger-Pufferstation 110, die eine Abwandlung zur Pufferstation 110 der Fig. 4 repräsentiert.

Die Pufferstation 110 der Fig. 5 ist regalartig aufgebaut. Die Pufferstation 110 weist Pfosten 120 auf, die sich in der Höhenrichtung Y erstrecken und die als Grundgestell für die Pufferstation 110 dienen. Entlang der Pfosten 120 sind rampenförmig ausgebildete Förderelemente 122 vertikal beweglich gelagert (vergleiche Pfeile 124). Die Förderelemente 122 sind in der vertikalen Richtung Y in einen Bereich beweglich, wo die FTF 24 die Transportträger 28 kämmend aufnehmen bzw. abgeben können, wie es z.B. in der Patentanmeldung DE 10 2014 111 396 beschrieben ist.

Die Pfosten 120 sind in der Längsrichtung X beabstandet zueinander angeordnet. In der Längsrichtung X sind zwischen denen sich gegenüberliegenden Pfosten 120 Linearförderer 126 angeordnet. In der Fig. 5 sind vier Linearförderer 126-1 bis 126-4 gezeigt. Es versteht sich, dass mehr oder weniger Linearförderer 126 eingesetzt werden können. Die Linearförderer 126 der Fig. 5 sind exemplarisch in zwei Ebenen in der Höhenrichtung Y angeordnet. Die beiden Linearförderer 126-1 und 126-2 liegen in einer unteren Ebene. Die Linearförderer 126-3 und 126-4 liegen in einer oberen Ebene. Jeweils zwei der Linearförderer 126 sind in der Längsrichtung X hintereinander angeordnet, um zwei Pufferplätze bereitzustellen. Die Pufferstation 110 der Fig. 5 stellt insgesamt vier Pufferplätze bereit, von denen drei Pufferplätze bereits mit Transportträgern 28 belegt sind. Der Transportträger 28, der gerade von dem FTF 24 an das Förderelement 22-1 abgegeben wird, kann auf dem Linearförderer 126-3 (Pufferplatz) geparkt werden, indem das Förderelement 122 vertikal auf die zweite Ebene angehoben wird und indem das Förderelement 122 sowie der Linearförderer 126-3 aktiv angetrieben werden, um den Transportträger 28 umzusetzen. Die Transportträger 28 verlassen die Pufferplätze auf analoge Weise, indem das Förderelement 122-2 vertikal auf die richtige Ebene verfahren wird und anschließend die beteiligten Förderer aktiv angetrieben werden. Die Transportträger 28 können zwischen Pufferplätzen der gleichen Ebene (in beiden Richtungen) umgesetzt werden, indem die entsprechenden Linearförderer 126, vorzugsweise synchronisiert, angetrieben werden. Es können beliebig viele Ebenen und Pufferplätze vorgesehen werden.

Ferner versteht es sich, dass die Ein- und Auslagerrichtungen (Transportrichtungen) generell auch umgekehrt und/oder entgegengesetzt definiert werden können, auch für die FTF 24.

Außerdem versteht es sich, dass die Pufferstation 110 unabhängig von ihrer Ausbildung, auch zusätzlich im Bereich der Vereinnahmungsstation 60 angeordnet sein kann, um eine Vielzahl der Transportträger 28 automatenspezifisch zu beladen. Üblicherweise werden die Wareneingangs-Stückgüter 56 typenrein bei der Vereinnahmungsstation 60 angeliefert, so dass zwecks Durchmischung der Stückgüter auf den Transportträgern 28 mehrere Vereinnahmungszyklen (Anlieferung Wareneingangs-Stückgüter, Erfassen und Identifizieren der Wareneingangs-Stückgüter inklusive ggf. einer Überprüfung, und Umsetzen der Wareneingangs-Stückgüter) durchlaufen werden müssen, bevor jeder der automatenspezifischen Transportträger 28 seine gewünschte Beladung mit einzulagernden Waren-Eingangsstückgütern 56 aufweist.

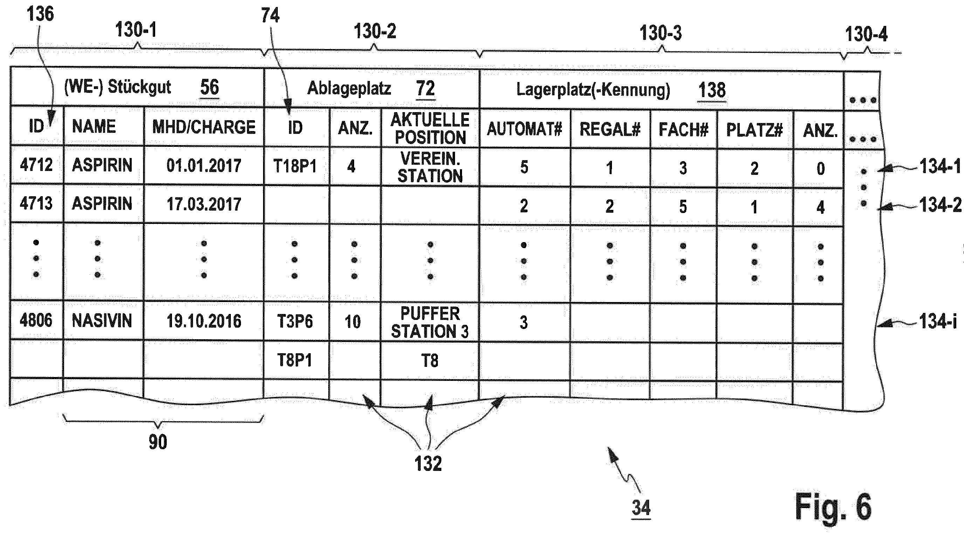

Fig. 6 zeigt eine exemplarische Ausführungsform der Referenz-Tabelle 34. Die Referenz-Tabelle 34 wird von der DFA 32 bearbeitet, um den Wareneingangs-Stückgütern 56 einen der Lagerplätze 108 zuzuweisen, wobei das einzulagernde Wareneingangs-Stückgut 56 vorzugsweise nur ein einziges Mal datentechnisch erfasst wird, insbesondere in der Vereinnahmungsstation 60 im Wareneingangs-Bereich 12 (vergleiche Fig. 1).

Die Tabelle 34 weist mehrere logisch zusammenhängende Abschnitte 130 auf. Im ersten Abschnitt 130-1 werden Informationen in Form von Datenfeldern 132 hinterlegt, die die einzulagernden Wareneingangs-Stückgüter 56 eindeutig identifizieren. Im Abschnitt 130-2 werden Informationen zu den Ablageplätzen 72 auf den Transportträgern 28 hinterlegt. Im Abschnitt 130-3 werden Informationen zum zugehörigen Lagerplatz 108 im Automaten 50 hinterlegt. Weitere Informationen können in einem oder mehreren weiteren Abschnitten 130-4 hinterlegt werden. Datenfelder 132, die in einer Zeile 134 der Tabelle 34 angeordnet sind, gehören zusammen und bilden einen zusammenhängen bzw. zusammengehörigen Datensatz.

Die erste Zeile 134-1 der Tabelle 34 der Fig. 6 repräsentiert z.B. den Pharma-Artikel "Aspirin", der ein Mindesthaltbarkeitsdatum (MHD) vom 01.01.2017 aufweist. Dieser Artikel hat eine systeminterne Stückgut-Kennung (ID) 136 mit der Bezeichnung "4712" zugewiesen bekommen. Vier dieser Aspirin-Artikel wurden bereits in der Vereinnahmungsstation 60 auf dem Ablageplatz 72 mit der Ablageplatz-Kennung 74 mit der Bezeichnung "T18P1" platziert. Aktuell befindet sich der entsprechende Transportträger 28 (mit der Transportträgerkennung "T18") noch in der Vereinnahmungsstation 60. Diese vier Aspirin-Artikel wurden jedoch bereits von der DVA 32 (z.B. mittels einer Lagerverwaltungssoftware) einem Lagerplatz 108 mit einer eindeutigen Lagerplatz-Kennung 138 zugeordnet. Sowohl die Ablageplatz-Kennung 74 als auch die Lagerplatz-Kennung 138 stellen eindeutige Adresse bzw. Orte innerhalb des Systems 10 dar. Der Aspirin-Artikel der ersten Zeile 134-1 soll z.B. am Lagerplatz 108 mit der (exemplarischen) Lagerplatz-Kennung "5-12-3-2" eingelagert werden, der zurzeit Null Artikel speichert. Die Bezeichnung "5-12-3-2" repräsentiert eine Automatennummer, eine Regalnummer, eine Regalfach- bzw. Regalbodennummer sowie eine Regalplatznummer bzw. eine Lagerplatznummer im Automaten "5" im Regal "12" im Regalfach "3". Die erste Zeile 134-1 repräsentiert einen Zustand, in welchem der Artikel mit der Stückgut-Kennung "4712" bereits in der Vereinnahmungsstation 60 erfasst und identifiziert sowie auf einen der Transportträger 28 umgeladen wurde, wobei sein Zielort innerhalb des Systems 10 bzw. eines der Automaten 50 bereits ebenfalls von der DVA 32 festgelegt ist, um beispielsweise den Bedarf dieses Automaten 50 an Nachschub zu decken.

Die zweite Zeile 134-2 dient zur Veranschaulichung einer Situation, in welcher das entsprechende Wareneingangs-Stückgut 56 bereits in der Vereinnahmungsstation 60 erfasst und identifiziert wurde, aber noch nicht auf einen der Transportträger 28 umgeladen wurde. Auch steht bereits der Zielort für diesen Artikel fest. Bei diesem Beispiel wählt der Mitarbeiter 76 z.B. willkürlich einen freien Ablageplatz 72 (vergleiche z.B. 72-1 in Fig. 1) aus, um die Wareneingangs-Stückgüter 56 auf die Transportträger 28 zu laden. Dies wird in der Tabelle 34 verfolgt und aktualisiert, indem die entsprechende Ablageort-Kennung 76 kommuniziert wird.

Die weitere Zeile 134-i dient zur exemplarischen Verdeutlichung einer Situation, in welcher der Mitarbeiter 76 das Wareneingangs-Stückgut 56 bereits auf einen der Transportträger 28 umgeladen hat. Dieser Transportträger 28 befindet sich aktuell noch im Bereich der dritten Pufferstation. Sein Zielort ist lediglich in Form des dritten Automaten 50 festgelegt. Es ist noch nicht festgelegt, in welchen Lagerplatz 108 der entsprechende Artikel tatsächlich eingelagert werden wird. Diese Entscheidung kann kurzfristig getroffen werden, z.B. in Abhängigkeit davon, welcher der Lagerplätze 108 des dritten Automaten 50 zum Zeitpunkt der Anlieferung des entsprechenden Transportträgers 28 in den dritten Automaten 50 tatsächlich frei ist (chaotische Einlagerung). Verglichen mit einem Postleitzahlensystem ist also vorerst nur die Leitziffer bekannt, die aber ausreicht, um das Stückgut zum richtigen Automaten 50 zu schicken.

Die Tabelle 34 bringt also zum Ausdruck, dass mit einer einmaligen Erfassung des Wareneingangs-Stückguts 56 ein Aufenthaltsort sowie ein Bestimmungsort dieses Stückguts eindeutig beschreibbar und festlegbar ist, wobei dennoch ein ausreichender Grad an Dynamik bereitgestellt wird, um z.B. kurzfristig auf äußere Umstände (z.B. Eilaufträge oder Ähnliches) reagieren zu können.

Es versteht sich, dass die Tabelle 34 nicht tatsächlich in dieser Form vorgehalten werden muss. Die Tabelle 34 kann in Form einer relationalen Datenbank realisiert sein. Die Tabelle 34 kann sich aus Datenfeldern und/oder Datensätzen zusammensetzen, die Teil unterschiedlicher Steuerungs- und Verwaltungsmodule (z.B. von Bestandsdatenbanken, einer Lagerplatzdatenbank, einer Kommissionierauftrags-Bearbeitungsdatenbank oder dergleichen) sind. Ferner versteht es sich, dass alle relevanten Informationen bzw. Datenfelder zwischen der Tabelle/DVA und den beteiligten Komponenten des Systems 10 ausgetauscht werden.

Ferner ist es generell möglich, die Transportträger 28 direkt in die Regale 52 umzusetzen, wenn die Regalböden 102 und die Transportträger 28 entsprechend ausgebildet sind. Die Regalböden 106 und die Transportträger 28 können in diesem Fall z.B. annähernd gleiche Abmessungen aufweisen. Die Regalböden 106 und die Transportträger 28 können ferner identische Aufhängungseinrichtungen aufweisen, um innerhalb der Regale 52 gehalten zu werden. Es versteht sich, dass die Lastaufnahmemittel 118 der RBG 54 in diesem Fall entsprechend eingerichtet sind, um die Regalböden 106 bzw. die Transportträger 28 in die Regale 52 einzulagern, aus den Regalen 52 auszulagern, von den FTF 28 abzuheben und auf den FTF 28 abzusetzen.

Ferner versteht es sich, dass die Waren-Eingangsstückgüter 56 nicht zwingend auf einem freien Ablageplatz 72 auf einem der Transportträger 28 platziert werden müssen. Wenn nach der Erfassung des entsprechenden Wareneingangs-Stückguts 56 durch die DVA 32 festgestellt wird, dass dieser spezielle Artikeltyp mit all seinen Attributen bzw. Merkmalen bereits auf einem der Transportträger 28 bereits vorhanden ist, so kann dieses Wareneingangs-Stückgut 56 zusätzlich auf den entsprechenden Ablageplatz 72 platziert werden, so dass sich die Anzahl dieses speziellen Artikeltyps auf diesem Ablageplatz 72 entsprechend erhöht.

Fig. 6 zeigt ein Flussdiagramm eines Verfahrens 150 zum Betreiben eines Lager- und Kommissioniersystems 10 gemäß der Erfindung, insbesondere ein Verfahren zum Befüllen eines Kommissionier-Automaten 50 der oben erwähnten Art.

Das Verfahren 150 beginnt in einem Schritt S10 mit der Anlieferung der Wareneingangs-Stückgüter 56 durch die Lieferanten 58. In einem weiteren Schritt S12 werden die angelieferten Waren-Eingangsstückgüter 56, vorzugsweise einmalig, erfasst. Diese Erfassung erfolgt in der Vereinnahmungsstation 60 und dient im Wesentlichen der Identifizierung der Waren-Eingangsstückgüter 56. Die Erfassung kann des Weiteren benutzt werden, um die Vollständigkeit und Richtigkeit der Lieferung zu überprüfen. In einem Schritt S12 kann abgefragt werden, ob das gerade erfasste (und identifizierte) Wareneingangs-Stückgut 56 sofort zur (initialen oder erneuten) Befüllung des Automaten 50 benötigt wird.

In einem Schritt S16 wird abgefragt, welche Entität (Mitarbeiter oder DVA) den (freien) Ablageplatz 72 auf einem der Transportträger 28 bestimmt. Im Schritt S16 wählt der Mitarbeiter 76 den freien Ablageplatz 72-1 aus. In einem Schritt S20 wählt die DVA 32 den freien Ablageplatz 72-1 aus. Es versteht sich, dass die Abfrage des Schritts S16 auch zu einem anderen Zeitpunkt stattfinden kann. Dies hängt z.B. davon ab, ob die initiale bzw. erneute Befüllung des Automaten 50 bedarfsgetriggert ist oder durch die Anlieferung der Wareneingangs-Stückgüter 56 ausgelöst wird. Im bedarfsabhängigen Fall wählt die DVA 32 die Ablageplätze 72 aus. Im Anlieferungsfall wählt der Mitarbeiter 76 die freien Ablageplätze 72 aus. Wenn der Mitarbeiter 76 die freien Ablageplätze 72 auswählt, geschieht dies üblicherweise direkt im Anschluss an die Erfassung im Schritt S12. Wenn die DVA 32 den freien Ablageplatz 72 im Schritt S20 auswählt, kann diese Auswahl zeitlich entkoppelt zum Erfassen des Schritts S12 und zeitlich entkoppelt zur Anlieferung des Schritts S10 erfolgen. In diesem Fall ist es z.B. möglich, dass die angelieferten Stückgüter nach ihrer Erfassung zuerst in das Langzeitlager 14 verbracht werden, um später, insbesondere ohne erneute Erfassung, auf die Transportträger 28 geladen zu werden (vergleiche Schritt S22). In einem Schritt S24 werden die Transportträger 28 sowie die Wareneingangs-Stückgüter 56 in der Vereinnahmungsstation 60 bereitgestellt. Dann werden die bereitgestellten Transportträger 28 in einem Schritt S26 mit den (bereits erfassten) Wareneingangs-Stückgütern 56 beladen. In einem Schritt S28 werden die fertig beladenen Transportträger 28 zu bzw. in den Automaten 50 verbracht. Die entsprechenden Kennungen werden an die DVA 32 kommuniziert, um die Tabelle 34 zu aktualisieren.

In einem Schritt S30 wird (in der Tabelle 34) abgefragt, ob bereits ein Lagerplatz 108 für das einzulagernde Wareneingangs-Stückgut 56 ausgewählt wurde, welches sich auf dem Transportträger 28 befindet. Falls noch kein Lagerplatz 108 ausgewählt wurde, wird in einem Schritt S32 ein freier Lagerplatz ausgewählt. Das Regalbediengerät 54 greift dann das entsprechende Wareneingangs-Stückgut 56 von Transportträger 28 und setzt es in den ausgewählten Lagerplatz 108 zwecks einer Einlagerung (vergleiche Schritt S32) um. Wenn die Auswahl des Lagerplatzes 108 bereits getroffen wurde, z.B. durch eine entsprechende Bedarfsmeldung des Automaten 50, erfolgt die Einlagerung des Schritts S34 sofort.

In einem Schritt S36 kann (optional) abgefragt werden, ob der Automat 50 weitere Stückgüter benötigt. Dies bedeutet, dass der Bedarf des Automaten 50 bestimmt wird, der in der Tabelle 34 ebenfalls verfolgt werden kann. Wenn der Automat 50 keine weiteren Stückgüter in Form eines Nachschubs benötigt, endet das Verfahren. Benötigt der Automat 50 jedoch weitere Stückgüter, wird in einem Schritt S38 abgefragt, ob sich die benötigten Stückgüter bereits im System 10 befinden. Wenn sich die Stückgüter bereits im System 10 befinden, insbesondere im Langzeitlager 14, werden die entsprechenden Wareneingangs-Stückgüter 56 an der Vereinnahmungsstation bereitgestellt und auf entsprechende Transportträger 28 umgeladen, insbesondere ohne erneut erfasst zu werden (vergleiche Schritt S24). Wenn die benötigten Stückgüter nicht vorhanden sind, werden sie in einem Schritt S40 bestellt, was anschließend zu einer Anlieferung gemäß dem Schritt S10 führt.

Wenn oben von vertikalen und horizontalen Orientierungen gesprochen wurde, versteht es sich von selbst, dass diese Orientierungen jederzeit durch eine Drehung miteinander vertauscht werden können und deshalb nicht einschränkend zu verstehen sind. In der Beschreibung der Figuren hat man sich bei der Wahl der Orientierung des Koordinatensystems generell an die in der Interlogistik üblichen Bezeichnungen gehalten, so dass die Längsrichtung mit X, die Tiefe (bzw. die Querrichtung) mit Z und die (vertikale) Höhenrichtung mit Y bezeichnet wurde. Des Weiteren wurden gleiche Teile und Merkmale mit gleichen Bezugszeichen versehen. Die in der Beschreibung enthaltenen Offenbarungen sind sinngemäß auf ähnliche Teile und Merkmale mit ähnlichen Bezugszeichen übertragbar. Lage- und Orientierungsangabe (z.B. "oben", "unten", "seitlich", "längs", "quer", "horizontal", "vertikal" und Ähnliches) sind auf die unmittelbar beschriebene Figur bezogen. Bei einer Änderung der Lage oder der Orientierung sind diese Angaben aber sinngemäß auf die neue Lage bzw. Orientierung zu übertragen.

Ein "Artikel" ist eine durch einen Artikeltyp unterscheidbare (kleinste) Einheit eines Artikelsortiments. Die Artikel werden durch die Stückgüter repräsentiert. Die Stückgüter sind individualisierte, unterscheidbare Güter, die einzeln gehandhabt werden können und deren Bestand stückweise oder als Gebinde (case) geführt wird. Die Begriffe "Artikel" und "Stückgüter" wurden hier äquivalent verwendet.

Eine Koordinierung einer Abarbeitung von Kommissionieraufträgen übernimmt eine Auftragsabwicklung, die in die Steuereinrichtung 30 integriert ist. Die Steuereinrichtung 30 kann ferner ein Warenwirtschaftssystem aufweisen.

Generell kann die Bauform der offenbarten Regale, insbesondere eine Orientierung der Regalfächer bzw. -plätze von der streng horizontalen Ausrichtung abweichen. Die Regalfächer können so ausgebildet sein, dass sie z.B. einen V-förmigen Boden aufweisen, so dass insbesondere runde bzw. zylindrische Stückgüter (durch die Schwerkraft) immer in einem vorbestimmten Bereich des Regalfachs angeordnet sind, was eine maschinelle Ein- und Auslagerung erheblich erleichtert, weil die Position des eingelagerten Stückguts innerhalb des Regalfachs nicht erfasst werden muss. Die Regalfächer sind dann z.B. diagonal ausgerichtet. Ferner können z.B. Regale mit wabenförmigen Regalfächer bzw. - plätzen benutzt werden. Derartige Regale sind in der Querrichtung Z vorzugsweise mehrstufig hintereinander und in der Längsrichtung X verschieblich ausgebildet, um auf eine hintere Regalreihe zugreifen zu können.

### Bezugszeichenliste

- 10: Lager- und Kommissioniersystem
- 12: WE-Bereich
- 14: Langzeitlager (optional)
- HRL: Hochregallager
- 16: Kommissionierbereich
- 18: WA-Bereich/Versand
- 20: Transportsystem
- 22: Fahrerloses Transportsystem (FTS)
- 24: Fahrerlose Transportfahrzeuge (FTF)
- 26: (stationäre) Fördertechnik (optiona)
- 28: Transportträger
- 30: Steuereinrichtung
- 32: Datenverarbeitungsanlage (DVA)
- 34: Referenz-Tabelle
- 36: Lagerverwaltungsrechner (LVR)
- 38: Materialflussrechner (MFR)
- 40: Lagerplatzverwaltungsmodul
- 42: Navigationsmodul
- 44: Verkehrsregelungsmodul
- 46: Routenplanungsmodul
- 48: Kommunikation
- 50: Kommissionierautomat
- 52: Regal
- 54: RBG/Shuttle
- 56: WE-STKG
- 58: Lieferant
- 60: Vereinnahmungsstation
- 62: Erfassungseinrichtung
- 64: Versandbehälter
- 66: Beladungsvorgang
- 68: WE-Palette
- 70: WE-STKG-Stapel
- 72: Ablageplatz
- 74: Ablageplatz-Kennung
- 76: Mitarbeiter
- 78: Lichtstrahlen
- 80: Beamer
- 82: Anzeigevorrichtung
- 84: Scanner
- 86: Tastatur
- 88: Kamera
- 90: Attribut von 56
- 100: Gehäuse von 50
- 101: Boden
- 102: Regalboden von 52
- 104: Fahrweg
- 106: Fahrschiene von 54
- 108: Lagerplatz
- 110: Transportträger-Pufferstation
- 112: Riemen-/Kettenförderer
- 114: Auftragsbehälter
- 116: Aufnahmeöffnung von 112
- 118: Lastaufnahmemittel von 54
- 120: Pfosten
- 122: rampenförmige Förderelemente
- 124: vertikale Bewegung von 122
- 126: Linearförderer
- 130: Abschnitt/Bereich von 34
- 132: Datenfeld
- 134: Zeile von 34
- 136: Stückgut-Kennung
- 138: Lagerplatz-Kennung
- 150: Verfahren

## Patentansprüche

1. Lager- und Kommissioniersystem (10) zum Kommissionieren von Stückgütern gemäß Kommissionieraufträgen, wobei die Stückgüter verschiedenen Zugriffshäufigkeits-Kategorien (ABC) angehören, aufweisend:
mindestens einen Kommissionier-Automaten (50) für Stückgüter, die im Wesentlichen einer Zugriffshäufigkeits-Kategorie angehören, wobei jeder der Automaten (50) eingerichtet ist, die Stückgüter vollautomatisch einzulagern, einzusammeln, zu puffern und abzugeben, wobei jeder der Automaten (50) eine Vielzahl von Lagerplätzen (108) aufweist, wobei jeder der Lagerplätze (108) eine individualisierende Lagerplatz-Kennung (138) aufweist;
eine, vorzugsweise einzige, Vereinnahmungsstation (60), die eingerichtet ist, zumindest ein kennzeichnendes Attribut (90) eines Wareneingangs-Stückguts (56) zu erfassen;
ein Transportsystem (20), das eine Vielzahl von Transportträgern (28) aufweist, wobei jeder der Transportträger (28) ein Tablar ist, das eine Vielzahl von Ablageplätzen (72) aufweist, wo das erfasste Wareneingangs-Stückgut (56) zwecks Beladung des Transportträgers (28) platzierbar ist, und wobei jedem der Ablageplätze (72) eine individualisierende Ablageplatz-Kennung (76) zugeordnet ist;
eine Datenverarbeitungsanlage (32), die eingerichtet ist, eine Referenz-Tabelle (34) zu verwalten und zu aktualisieren, wobei die Tabelle (34) eingerichtet ist, dem Wareneingangs-Stückgut (56) das kennzeichnende Attribut (90), einen der Ablageplätze (72) und einen der Lagerplätze (108) zuzuordnen;
wobei das Transportsystem (20) die Vereinnahmungsstation (60) und den zumindest einen Automaten (50) materialflusstechnisch miteinander verbindet und eingerichtet ist, einen der Transportträger (28), der in der Vereinnahmungsstation (60) mit dem erfassten Wareneingangs-Stückgut (56) beladen wurde, indem das erfasste Wareneingang-Stückgüter (56) auf einem ausgewählten Ablageplatz (72-1) platziert wird, von der Vereinnahmungsstation (60) in den zumindest einen Automaten (50) hinein zu transportieren und geleerte Transportträger (28) zwecks Beladung zurück zur Vereinnahmungsstation (60) zu transportieren; und
wobei die Datenverarbeitungsanlage (32) ferner eingerichtet ist, die Referenz-Tabelle (34) für das Wareneingangs-Stückgut (56) durch Zuordnung basierend auf dem erfassten Attribut (90), basierend auf einer Ablageplatz-Kennung (76) eines ausgewählten Ablageplatzes (72-1) und basierend auf einer Lagerplatz-Kennung (138) eines ausgewählten Lagerplatzes (108) zu aktualisieren;
wobei das Transportsystem (20), vorzugsweise ausschließlich, eine Vielzahl von fahrerlosen Transportfahrzeugen (24) aufweist, wobei die fahrerlosen Transportfahrzeuge (24) eingerichtet sind, die Transportträger (28) durch das System (10) zu transportieren und
wobei der mindestens eine Automat (50) so eingerichtet ist, dass die fahrerlosen Transportfahrzeuge (24) durch den mindestens einen Automaten (50) hindurchfahren können, um die Transportträger (28) innerhalb des mindestens einen Automaten (50) abzugeben und aufzunehmen.

2. System nach Anspruch 1, wobei die Vereinnahmungsstation (60) ferner eingerichtet ist, die Ablageplatz-Kennung (76) des ausgewählten Ablageplatzes (72-1) zu erfassen.

3. System nach Anspruch 1 oder 2, wobei der mindestens eine Automat (50) aufweist:
ein Regal (52), das eine Vielzahl von Regalböden (102) aufweist, die übereinander und/oder nebeneinander angeordnet sind und in welchen die Stückgüter einfach- oder mehrfachtief lagerbar sind;
mindestens eine Sammelvorrichtung (112), die zum vorübergehenden Sammeln von mehreren der Stückgüter eingerichtet ist und die eine Aufnahmeöffnung (116) und eine Abgabevorrichtung aufweist; und
ein Regalbediengerät (54), das in einer Längsrichtung (X) entlang des Regals (52) beweglich ist und das eingerichtet ist, die Stückgüter entlang einer Querrichtung (Z) in bzw. aus jedem der Lagerplätze (108) ein- und auszulagern und an die Aufnahmeöffnungen (116) der Sammelvorrichtungen (112) abzugeben.

4. System nach einem der vorhergehenden Ansprüche, wobei das Transportsystem (20) ausschließlich die Vielzahl von fahrerlosen Transportfahrzeugen (24) aufweist.

5. System nach Anspruch 4, wobei die fahrerlosen Transportfahrzeuge (24) so an dem mindestens einen Automaten (50) vorbei und/oder durch den mindestens einen Automaten (50) hindurch geführt werden, dass kommissionierte Stückgüter automatisiert an die fahrerlosen Transportfahrzeuge (24) abgebbar sind.

6. System nach einem der vorhergehenden Ansprüche, wobei jeder der Automaten (50) in einem Kommissionier-Bereich (16) des Systems (10) angeordnet ist, wobei die Vereinnahmungsstation (60) in einem Wareneingangs-Bereich (12) des Systems (10) angeordnet ist und wobei die Bereiche (12, 16) des Systems (10) entfernt zueinander angeordnet sind.

7. System nach einem der vorhergehenden Ansprüche, wobei das Wareneingangs-Stückgut (56) ausschließlich über die Transportträger (28) in den mindestens einen Automaten (50) einlagerbar ist.

8. System nach einem der vorhergehenden Ansprüche, das ferner mindestens eine Transportträger-Pufferstation (110) aufweist, die innerhalb des zumindest einen Automaten (50) angeordnet ist, wobei ein Regalbediengerät (54) des zumindest einen Automaten (50) entlang der Pufferstation (110) beweglich ist, um einzulagernde Wareneingangs-Stückgüter (56) von den Transportträgern (28) zu greifen und an freie Lagerplätze (108), vorzugsweise chaotisch, abzugeben, wobei die Lagerplätze (108), in welche die einzulagernden Wareneingangs-Stückgüter (56) bereits abgegeben wurden, als belegte Lagerplätze (108) identifiziert werden und eine entsprechende an die Referenz-Tabelle (34) zwecks entsprechender Aktualisierung kommuniziert wird.

9. System nach Anspruch 8, wobei die Vereinnahmungsstation (60) eine weitere Transportträger-Pufferstation (110) aufweist.

10. System nach Anspruch 8 oder 9, wobei jede der Transportträger-Pufferstationen (110) eingerichtet ist, die Transportträger (28) isoliert vom Transportsystem (20), vorzugsweise in einem regalartigen Gestell mit mindestens einer Ebene, aufzunehmen, zu puffern und später wieder an das Transportsystem (20) abzugeben.

11. System nach einem der vorhergehenden Ansprüche, wobei die Datenverarbeitungsanlage (32) ferner eingerichtet ist, basierend auf Stückgut-Bedarfsmeldungen, die von einer Lagerverwaltung erzeugt werden, um die Automaten initial und/oder erneut mit den Stückgütern zu befüllen, Wareneingangs-Stückgütern (56) freie Ablageplätze (72-1) zuzuweisen und die freien Ablageplätze (72-1) in der Vereinnahmungsstation (60) anzuzeigen, sobald ein entsprechendes Wareneingangs-Stückgut (56) und der entsprechende Transportträger (28) bei der Vereinnahmungsstation (60) zur Beladung bereitstehen.

12. System (10) nach einem der vorhergehenden Ansprüche, wobei der mindestens eine Automat (60) wechselbare Regalböden (106) aufweist und die Transportträger (28) so ausgebildet sind, dass die Transportträger (28) gegen die Regalböden (106) austauschbar sind.

13. Verfahren zum Befüllen eines Kommissionier-Automaten (50) mit Stückgütern in einem Lager- und Kommissioniersystem (10), das vorzugsweise gemäß einem der vorgehenden Ansprüche ausgebildet ist, wobei jedes der Stückgüter zumindest ein kennzeichnendes Attribut (90) aufweist, wobei der Automat (50) eingerichtet ist, die Stückgüter vollautomatisch einzulagern, zu sammeln und abzugeben, wobei der Automat (50) eine Vielzahl von Lagerplätzen (108) aufweist, wobei jeder der Lagerplätze (108) eine individualisierende Lagerplatz-Kennung (138) aufweist und wobei das Verfahren die Schritte aufweist:
Bereitstellen eines Wareneingangs-Stückguts (56) und eines Transportträgers (28) in einer Vereinnahmungsstation (60), wobei der Transportträger (28) ein Tablar ist, das eine Vielzahl von Ablageplätzen (72) aufweist, wobei jeder der Ablageplätze (72) eine individualisierende Ablageplatz-Kennung (76) aufweist;
Erfassen des kennzeichnenden Attributs (90) des Wareneingangs-Stückguts (56);
Auswählen eines Ablageplatzes (72-1) auf dem Transportträger (28), der frei ist, für das Wareneingangs-Stückgut (56);
Platzieren des Wareneingangs-Stückguts (56) auf dem ausgewählten Ablageplatz (72-1) des bereitgestellten Transportträgers (28);
Auswählen eines freien Lagerplatzes (108) für das Wareneingangs-Stückgut (56);
Bereitstellen einer Referenz-Tabelle (34), die eingerichtet ist, jedem der Wareneingangs-Stückgüter (56) sein kennzeichnendes Attribut (90), einen der Ablageplätze (72) und einen der Lagerplätze (108) zuzuordnen;
Aktualisieren der Referenz-Tabelle (34) für das Wareneingangs-Stückgut (56) durch Zuordnung basierend auf dem erfassten kennzeichnenden Attribut (90) des Wareneingang-Stückguts (56), basierend auf der Ablageplatz-Kennung (76) des ausgewählten Ablageplatzes (72-1) und basierend auf der Lagerplatz-Kennung (138) des ausgewählten Lagerplatzes (138); und
Transportieren des Transportträgers (28), auf dem das Wareneingangs-Stückgut (56) platziert ist, mittels einer Vielzahl von fahrerlosen Transportfahrzeugen (24) von der Vereinnahmungsstation (60) in den Automaten (50) hinein basierend auf der Lagerplatz-Kennung (138) des Wareneingangs-Stückguts (56), wobei die fahrerlosen Transportfahrzeuge (24) durch den Automaten (50) hindurchfahren und die Transportträger (28) innerhalb des Automaten (50) abgeben und aufnehmen.

14. Verfahren nach Anspruch 13, das ferner aufweist: Umsetzen des Wareneingang-Stückguts (56) vom Transportträger (28) in dem Automaten (50) auf den ausgewählten Lagerplatz (108) basierend auf der entsprechenden Lagerplatz-Kennung (138) durch ein Regalbediengerät (54).

## Claims

1. A storage and order-picking system (10) for picking piece goods in accordance with picking orders, wherein the piece goods belong to different access-frequency categories (ABC), comprising:
at least one order-picking machine (50) for piece goods substantially belonging to one access-frequency category, wherein each of the machines (50) is configured to store, collect, buffer, and deliver the piece goods in a fully-automated manner, wherein each of the machines (50) comprises a plurality of storage locations (108), wherein each of the storage locations (108) comprises an individualizing storage-location label (138);
one, preferably single, receiving station (60) being configured to capture a labelling attribute (90) of the goods-receipt piece good (56);
a transport system (20) comprising a plurality of transport carriers (28), wherein each of the transport carriers (28) is a tray which comprises a plurality of deposition locations (72) where the captured goods-receipt piece good (56) can be placed for the purpose of loading the transport carrier (28), and wherein an individualizing deposition-location label (76) is assigned to each of the deposition locations (72);
a data processing system (32) configured to manage and update a reference table (34), wherein the table (34) is configured to assign the attribute (90), one of the deposition locations (72), and one of the storage locations (108) to the goods-receipt piece good (56);
wherein the transport system (20) connects, in terms of material flow, the receiving station (60) and the at least one machine (50) and is configured: for transporting one of the transport carriers (28), which has been loaded in the receiving station (60) with the captured goods-receipt piece good (56) by placing the captured goods receipt-piece goods (56) onto a selected deposition location (72-1), from the receiving station (60) into the at least one machine (50), and for transporting emptied transport carriers (28) back to the receiving station (60) for the purpose of loading; and
wherein the data processing system (32) is further configured to update the reference table (34) for the goods-receipt piece good (56) by assignment based on the captured attribute (90), based on a deposition-location label (76) of a selected deposition location (72-1), and based on a storage-location label (138) of a selected storage location (108),
wherein the transport system (20) comprises, preferably exclusively, a plurality of driverless transport vehicles (24), wherein the driverless transport vehicles (24) are configured to transport the transport carriers (28) through the system (10), and
wherein the at least one machine (50) is configured such that the driverless transport vehicles (24) can travel through the at least one machine (50) for delivering and receiving the transport carriers (28) within the at least one machine (50).

2. The system of claim 1, wherein the receiving station (60) is further configured to capture the deposition-location label (76) of the selected deposition locations (72-1).

3. The system of claim 1 or 2, wherein the at least one machine (50) comprises:
a rack (52) comprising a plurality of rack shelves (102) being arranged on top of each other and/or next to each other and into which the piece goods can be stored single-deep or multiple-deep;
at least one collecting device (112) being configured for temporarily collecting several ones of the piece goods, and comprising a receiving opening (116) and a delivering device; and
a storage and retrieval device (54) moveable along the rack (52) in a longitudinal direction (X), and configured to store and retrieve the piece goods along a transversal direction (Z) in and from each of the storage locations (108) and to deliver the same to the receiving openings (116) of the collecting devices (112).

4. The system of any of the preceding claims, wherein the transport system (20) comprises exclusively the plurality of driverless transport vehicles (24).

5. The system of claim 4, wherein the driverless transport vehicles (24) are guided past and/or through the at least one machine (50) such that picked piece goods are deliverable to the driverless transport vehicles (24) in an automated manner.

6. The system of any of the preceding claims, wherein each of the machines (50) is arranged in a picking area (16) of the system (10), wherein the receiving station (60) is arranged in a goods-receipt area (12) of the system (10), and wherein the areas (12, 16) of the system (10) are arranged at a distance to each other.

7. The system of any of the preceding claims, wherein the goods-receipt piece good (56) is storable exclusively via the transport carriers (28) into the at least one machine (50).

8. The system of any of the preceding claims, further comprising at least one transport-carrier buffering station (110) being arranged within the at least one machine (50), wherein a storage and retrieval device (54) of the at least one machine (50) is moveable along the buffering station (110) for grabbing to-be-stored goods-receipt piece goods (56) from the transport carriers (28) and for delivering the same to free storage locations (108), preferably in a chaotic manner, wherein the storage locations (108) into which the to-be-stored goods-receipt piece goods (56) have already been delivered, are identified as occupied storage locations (108) and are communicated to the reference table (34) for a corresponding update.

9. The system of claim 8, wherein the receiving station (60) comprises a further transport-carrier buffering station (110).

10. The system of claim 9 or 10, wherein each of the transport-carrier buffering stations (110) is configured to receive, buffer, and deliver back to the transport system (20) later the transport carriers (28) separate from the transport system (20), preferably in a rack-like frame having at least one plane.

11. The system of any of the preceding claims, wherein the data processing system (32) is further configured to assign free deposition locations (72-1), based on piece-good demand notifications generated by a warehouse management for filling the machines initially and/or repeatedly with the piece goods, to the goods-receipt piece goods (56), and to display the free deposition locations (72-1) in the receiving station (60) as soon as a corresponding goods-receipt piece good (56) and the corresponding transport carrier (28) are available for loading at the receiving station (60).

12. The system (10) of any of the preceding claims, wherein the at least one machine (60) comprises exchangeable rack shelves (106), and wherein the transport carriers (28) are formed such that the transport carriers (28) are exchangeable by the rack shelves (106).

13. A method for filling an order-picking machine (50) with piece goods in a storage and order-picking system (10), which is preferably formed in accordance with one of the preceding claims, wherein each of the piece goods comprises at least one labeling attribute (90), wherein the machine (50) is configured to store, buffer, and deliver the piece goods in a fully automated manner, wherein the machine (50) comprises a plurality of storage locations (108), wherein each of the storage locations (108) comprises an individualizing storage-location label (138), and wherein the method comprises the steps of:
providing a goods-receipt piece good (56) and a transport carrier (28) in a receiving station (60), wherein the transport carrier (28) is a tray which comprises a plurality of deposition locations (72), wherein each of the deposition locations (72) comprises an individualizing deposition-location label (76);
capturing the attribute (90) of the goods-receipt piece good (56);
selecting a deposition location (72-1) on the transport carrier (28), which is free, for the goods-receipt piece good (56);
placing the goods-receipt piece good (56) on the selected deposition location (72-1) of the provided transport carrier (28);
selecting a free storage location (108) for the goods-receipt piece good (56);
providing a reference table (34) being configured to assign each of the goods-receipt piece goods (56) to its attribute (90), to one of the deposition locations (72), and to one of the storage locations (108);
updating the reference table (34) for the goods-receipt piece good (56) by assignment based on the captured attribute (90) of the goods receipt-piece goods (56), based on the deposition-location label (76) of the selected deposition location (72-1), and based on the storage-location label (138) of the selected storage location (138); and
transporting the transport carrier (28), on which the goods-receipt piece good (56) is placed, by means of a plurality of driverless transport vehicles (24) from the receiving station (60) into the machine (50) based on the storage-location label (138) of the goods-receipt piece good (56), wherein the driverless transport vehicles (24) travel through the machine (50), and deliver and receive the transport carriers (28) within the machine (50).

14. The method of claim 13, further comprising: transferring, by the storage and retrieval device (54), the goods receipt-piece good (56) from the transport carrier (28) in the machine (50) onto the selected storage location (108) based on the corresponding storage-location label (138).

## Revendications

1. Système de stockage et de préparation de commandes (10) destiné à préparer des commandes de marchandises de détail conformément à des ordres de préparation de commandes, les marchandises de détail appartenant à différentes catégories de fréquence d'accès (ABC), comprenant :
au moins un appareil automatique (50) de préparation de commandes pour des marchandises de détail qui appartiennent pour l'essentiel à une catégorie de fréquence d'accès, chacun des appareils automatiques (50) étant conçu pour mettre en stock, rassembler, mettre en tampon et délivrer les marchandises de détail de manière entièrement automatique, chacun des appareils automatiques (50) possédant une pluralité d'emplacements de stockage (108), chacun des emplacements de stockage (108) possédant un identificateur d'emplacement de stockage (138) singularisant ;
une, de préférence une seule, station de perception (60), qui est conçue pour acquérir au moins un attribut caractérisant (90) d'une marchandise de détail en réception (56) ;
un système de transport (20), qui possède une pluralité d'éléments porteurs de transport (28), chacun des éléments porteurs de transport (28) étant une tablette qui possède une pluralité d'emplacements de dépôt (72) où la marchandise de détail en réception (56) acquise peut être placée en vue du chargement de l'élément porteur de transport (28) et un identificateur d'emplacement de dépôt (76) singularisant étant attribué à chacun des emplacements de dépôt (72) ;
un équipement de traitement de données (32), qui est conçu pour gérer et pour actualiser un tableau de références (34), le tableau (34) étant conçu pour attribuer à la marchandise de détail en réception (56) l'attribut caractérisant (90), l'un des emplacements de dépôt (72) et l'un des emplacements de stockage (108) ;
le système de transport (20) reliant la station de perception (60) et l'au moins un appareil automatique (50) entre eux par technique de flux de matériel et étant conçu pour transporter l'un des éléments porteurs de transport (28), qui a été chargé dans la station de perception (60) avec la marchandise de détail en réception (56) acquise, en plaçant la marchandise de détail en réception (56) acquise sur un emplacement de dépôt (72-1) sélectionné, de la station de perception (60) à l'intérieur de l'au moins un appareil automatique (50) et pour transporter les éléments porteurs de transport (28) vidés en retour vers la station de perception (60) en vue du chargement ; et
l'équipement de traitement de données (32) étant en outre conçu pour actualiser le tableau de référence (34) pour la marchandise de détail en réception (56) par attribution, en se basant sur l'attribut (90) acquis, en se basant sur un identificateur d'emplacement de dépôt (76) d'un emplacement de dépôt (72-1) sélectionné et en se basant sur un identificateur d'emplacement de stockage (138) d'un emplacement de stockage (108) sélectionné ;
le système de transport (20) possédant, de préférence exclusivement, une pluralité de véhicules de transport sans conducteur (24), les véhicules de transport sans conducteur (24) étant conçus pour transporter les éléments porteurs de transport (28) à travers le système (10) et
l'au moins un appareil automatique (50) étant conçu de telle sorte que les véhicules de transport sans conducteur (24) peuvent circuler à travers l'au moins un appareil automatique (50) afin de délivrer et de réceptionner les éléments porteurs de transport (28) à l'intérieur de l'au moins un appareil automatique (50).

2. Système selon la revendication 1, la station de perception (60) étant en outre conçue pour acquérir l'identificateur d'emplacement de dépôt (76) de l'emplacement de dépôt (72-1) sélectionné.

3. Système selon la revendication 1 ou 2, l'au moins un appareil automatique (50) comprenant :
un rayonnage (52), qui possède une pluralité de fonds de rayonnage (102), lesquels sont disposés les uns au-dessus des autres et/ou les uns à côté des autres et dans lesquels les marchandises de détail peuvent être stockées sur une ou plusieurs profondeurs ;
au moins un dispositif de collecte (112), qui est conçu pour collecter temporairement plusieurs des marchandises de détail et qui possède une ouverture d'accueil (116) et un dispositif de délivrance ; et
un organe de commande de rayonnage (54), qui peut être déplacé dans une direction longitudinale (X) le long du rayonnage (52) et qui est conçu pour mettre en stock ou prélever les marchandises de détail le long d'une direction transversale (Z) dans ou depuis chacun des emplacements de stockage (108) et les délivrer aux ouvertures d'accueil (116) des dispositifs de collecte (112).

4. Système selon l'une des revendications précédentes, le système de transport (20) possédant exclusivement la pluralité de véhicules de transport sans conducteur (24).

5. Système selon la revendication 4, les véhicules de transport sans conducteur (24) étant guidés devant l'au moins un appareil automatique (50) et/ou à travers l'au moins un appareil automatique (50) de telle sorte que les marchandises de détail préparées peuvent être délivrées de manière automatisée aux véhicules de transport sans conducteur (24).

6. Système selon l'une des revendications précédentes, chacun des appareils automatiques (50) étant disposé dans une zone de préparation de commandes (16) du système (10), la station de perception (60) étant disposée dans une zone de réception de marchandises (12) du système (10) et les zones (12, 16) du système (10) étant disposées éloignées l'une de l'autre.

7. Système selon l'une des revendications précédentes, la marchandise de détail en réception (56) pouvant être mise en stock dans l'au moins un appareil automatique (50) exclusivement par le biais des éléments porteurs de transport (28).

8. Système selon l'une des revendications précédentes, lequel possède en plus au moins une station tampon d'élément porteur de transport (110), laquelle est disposée à l'intérieur de l'au moins un appareil automatique (50), un organe de commande de rayonnage (54) de l'au moins un appareil automatique (50) pouvant être déplacé le long de la station tampon (110) afin de saisir les marchandises de détail en réception (56) à mettre en stock des éléments porteurs de transport (28) et de les délivrer, de préférence de manière chaotique, à des emplacements de stockage (108) libres, les emplacements de stockage (108) dans lesquels les marchandises de détail en réception (56) à mettre en stock ont déjà été délivrées étant identifiés comme des emplacements de stockage (108) occupés et un correspondant étant communiqué au tableau de référence (34) en vue d'une actualisation en conséquence.

9. Système selon la revendication 8, la station de perception (60) possédant une station tampon d'élément porteur de transport (110) supplémentaire.

10. Système selon la revendication 8 ou 9, chaque station tampon d'élément porteur de transport (110) étant conçue pour accueillir, mettre en tampon et plus tard de nouveau délivrer au système de transport (20) les éléments porteurs de transport (28) isolément du système de transport (20), de préférence dans un bâti de type rayonnage comprenant au moins un niveau.

11. Système selon l'une des revendications précédentes, l'équipement de traitement de données (32) étant en outre conçu pour, en se basant sur des messages de besoin de marchandises de détail qui sont générés par un gestionnaire de stock en vue de remplir initialement et/ou de nouveau l'appareil automatique avec les marchandises de détail, attribuer des emplacements de dépôt (72-1) libres aux marchandises de détail en réception (56) et indiquer les emplacements de dépôt (72-1) libres dans la station de perception (60) dès qu'une marchandise de détail en réception (56) correspondante et que l'élément porteur de transport (28) correspondant sont prêts pour le chargement au niveau de la station de perception (60).

12. Système (10) selon l'une des revendications précédentes, l'au moins un appareil automatique (60) possédant des fonds de rayonnage (106) remplaçables et les éléments porteurs de transport (28) étant configurés de telle sorte que les éléments porteurs de transport (28) peuvent être remplacés par les fonds de rayonnage (106).

13. Procédé de remplissage d'un appareil automatique de préparation de commandes (50) avec des marchandises de détail dans un système de stockage et de préparation de commandes (10), lequel est de préférence configuré selon l'une des revendications précédentes, chacune des marchandises de détail possédant au moins un attribut caractérisant (90), l'appareil automatique (50) étant conçu pour mettre en stock, rassembler et délivrer les marchandises de détail de manière entièrement automatique, l'appareil automatique (50) possédant une pluralité d'emplacements de stockage (108), chacun des emplacements de stockage (108) possédant un identificateur d'emplacement de stockage (138) singularisant et le procédé comprenant les étapes suivantes :
mise à disposition d'une marchandise de détail en réception (56) et d'un élément porteur de transport (28) dans une station de perception (60), l'élément porteur de transport (28) étant une tablette qui possède une pluralité d'emplacements de dépôt (72), chacun des emplacements de dépôt (72) possédant un identificateur d'emplacement de dépôt (76) singularisant ;
acquisition de l'attribut caractérisant (90) de la marchandise de détail en réception (56) ;
sélection d'un emplacement de dépôt (72-1) sur l'élément porteur de transport (28), qui est libre, pour la marchandise de détail en réception (56) ;
mise en place de la marchandise de détail en réception (56) sur l'emplacement de dépôt (72-1) sélectionné de l'élément porteur de transport (28) mis à disposition ;
sélection d'un emplacement de stockage (108) libre pour la marchandise de détail en réception (56) ;
mise à disposition d'un tableau de références (34), lequel est conçu pour attribuer à chacune des marchandises de détail en réception (56) son attribut caractérisant (90), l'un des emplacements de dépôt (72) et l'un des emplacements de stockage (108) ;
actualisation du tableau de références (34) pour la marchandise de détail en réception (56) par attribution, en se basant sur l'attribut caractérisant (90) acquis de la marchandise de détail en réception (56), en se basant sur l'identificateur d'emplacement de dépôt (76) de l'emplacement de dépôt (72-1) sélectionné et en se basant sur l'identificateur d'emplacement de stockage (138) de l'emplacement de stockage (138) sélectionné ; et
transport de l'élément porteur de transport (28), sur lequel est placée la marchandise de détail en réception (56), au moyen d'une pluralité de véhicules de transport sans conducteur (24), de la station de perception (60) à l'intérieur de l'appareil automatique (50) en se basant sur l'identificateur d'emplacement de stockage (138) de la marchandise de détail en réception (56), les véhicules de transport sans conducteur (24) circulant à travers l'appareil automatique (50) et délivrant et réceptionnant les éléments porteurs de transport (28) à l'intérieur de l'appareil automatique (50).

14. Procédé selon la revendication 13, lequel comprend en outre : le déplacement de la marchandise de détail en réception (56) par l'organe de commande de rayonnage (54) de l'élément porteur de transport (28) dans l'appareil automatique (50) sur l'emplacement de stockage (108) sélectionné en se basant sur l'identificateur d'emplacement de stockage (138) correspondant.
